(19) Europäisches Patentamt
European Patent Office
Office européen des brevets

(11) **EP 3 936 887 B1**

(12) **FASCICULE DE BREVET EUROPEEN**

(45) Date de publication et mention
de la délivrance du brevet:
**10.05.2023 Bulletin 2023/19**

(21) Numéro de dépôt: **21180453.9**

(22) Date de dépôt: **18.06.2021**

(51) Classification Internationale des Brevets (IPC):
**G01S 7/481** (2006.01)  **G01S 7/4912** (2020.01)
**G01S 7/493** (2006.01)  **G01S 17/894** (2020.01)

(52) Classification Coopérative des Brevets (CPC):
**G01S 7/4816; G01S 7/4918; G01S 7/493;**
**G01S 17/894**

(54) **SYSTÈME LIDAR COHÉRENT À RAPPORT SIGNAL SUR BRUIT AMÉLIORÉ**

KOHÄRENTES LIDAR-SYSTEM MIT VERBESSERTEM SIGNAL-RAUSCH-VERHÄLTNIS

LIDAR COHERENT SYSTEM WITH IMPROVED SIGNAL-TO-NOISE RATIO

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.07.2020 FR 2007316**

(43) Date de publication de la demande:
**12.01.2022 Bulletin 2022/02**

(73) Titulaire: **Commissariat à l'Energie Atomique et
aux Energies
Alternatives
75015 Paris (FR)**

(72) Inventeurs:
• **DAAMI, Anis
38054 GRENOBLE CEDEX 09 (FR)**
• **FREY, Laurent
38054 GRENOBLE CEDEX 09 (FR)**

(74) Mandataire: **Atout PI Laplace
Immeuble "Visium"
22, avenue Aristide Briand
94117 Arcueil Cedex (FR)**

(56) Documents cités:
**JP-A- 2016 105 082    US-A1- 2019 025 431**

• **AUDE MARTIN ET AL: "Photonic Integrated
Circuit-Based FMCW Coherent LiDAR",
JOURNAL OF LIGHTWAVE TECHNOLOGY, vol.
36, no. 19, 1 octobre 2018 (2018-10-01), pages
4640-4645, XP055764841, USA ISSN: 0733-8724,
DOI: 10.1109/JLT.2018.2840223**

## Description

### DOMAINE DE L'INVENTION

La présente invention concerne le domaine de l'imagerie par Lidar cohérent et plus particulièrement des systèmes d'imagerie Lidar présentant une détection améliorée.

### ETAT DE LA TECHNIQUE

Un système Lidar cohérent est un système d'imagerie active effectuant l'imagerie d'une scène en 3 dimensions (distance et éventuellement vitesse radiale des objets). Cela implique l'utilisation d'une source lumineuse afin d'illuminer la scène et un détecteur (ou capteur d'image) ayant la capacité de codifier les valeurs de distance (et/ou de vitesse) afin d'obtenir une information tridimensionnelle de toute la scène observée. Plus spécifiquement à tout point de coordonnées (x,y) de la scène, une valeur de vitesse v(z) et éventuellement une valeur de profondeur P(z) lui sont attribuées. Cela a pour finalité d'obtenir une cartographie de distance z=f(x,y) et de vitesse $v_z$=g(x,y) de toute la scène.

Un système Lidar cohérent est un système dans lequel une partie de la source lumineuse d'éclairement cohérente est déviée afin d'être utilisée comme amplificateur du signal rétrodiffusé par la scène une fois celle-ci illuminée par le reste du faisceau non détourné.

Le principe d'un lidar cohérent est bien connu de l'état de la technique, la demande de brevet US 2019/025431 A1 en est un tel exemple. Un lidar cohérent comprend une source cohérente, typiquement un laser, qui émet une onde lumineuse cohérente (domaine IR, visible ou UV proche), un dispositif d'émission qui permet d'illuminer un volume de l'espace, et un dispositif de réception, qui collecte une fraction de l'onde lumineuse rétrodiffusée par une cible T. Le décalage de fréquence Doppler de l'onde rétrodiffusée est fonction de la vitesse radiale v de la cible T : A la réception on effectue un mélange entre l'onde lumineuse rétrodiffusée reçue dénommée onde signal S de fréquence signal fs et une partie de l'onde émise qui n'est pas passée par la scène, dénommée onde LO pour « oscillateur local », et présente une fréquence d'oscillateur local $f_{LO}$. L'interférence de ces deux ondes est détectée par un photo-détecteur PD, et le signal électrique en sortie du détecteur présente un terme oscillant dénommé signal de battement Sb, en plus des termes proportionnels à la puissance reçue et à la puissance d'oscillateur local. Ce signal est numérisé et on en extrait une information de vitesse de la cible T.

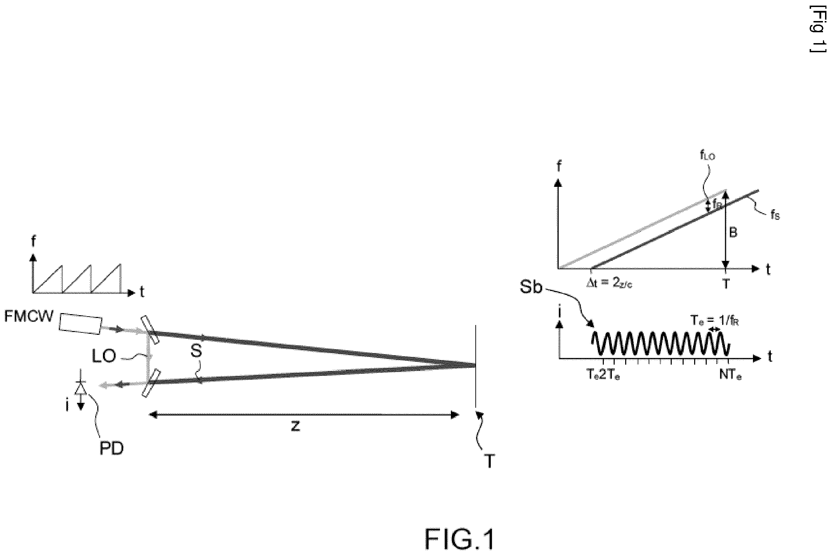

Dans un lidar cohérent à modulation de fréquence dit FMCW (« Frequency Modulated Continuous Wave ») schématisé sur la figure 1 la fréquence optique de la source cohérente f est modulée typiquement par une rampe linéaire périodique.

Les deux voies qui interfèrent sur le photo-détecteur produisent des battements dont la fréquence est proportionnelle au retard entre les deux voies, donc à la distance.

Plus précisément, pour une rampe linéaire, la fréquence des oscillations est :

$$f_R = \frac{2Bz}{cT}$$

avec B l'excursion de fréquence optique ou « chirp » pendant la durée T de la rampe, z la distance, c la vitesse de la lumière.

On peut déduire la distance z du nombre N ($N \approx Tf_R$) de périodes mesurées pendant la durée T:

$$Z \approx \frac{Nc}{2B}.$$

La résolution en distance est $\delta Z \approx \frac{c}{2B}$ . Il est également possible de mesurer $f_R$ par analyse spectrale par transformée de Fourier du signal de battements.

Le signal d'interférence contient une composante continue généralement importante et inutile, qui est supprimée par un filtre électronique passe-haut si le photo-récepteur est une photodiode. Dans les montages fibrés, il est pratique d'utiliser un coupleur 3dB qui fournit, à partir des deux voies objet et référence en entrée, deux signaux de sortie en opposition de phase qui éclairent deux photodiodes en série (photodiodes balancées). Le circuit de détection permet de faire la différence des deux photo-courants, donc de supprimer le DC (mode commun) et de détecter la partie AC (signal de battement). La partie AC est généralement amplifiée en externe par un amplificateur trans-impédance (TIA) avant d'être traitée par une électronique externe, par exemple un oscilloscope, pour mesurer la fréquence.

La technique lidar FMCW est une technique de mesure hétérodyne optique (c.à.d. qui met en jeu plusieurs fréquences optiques). La technique est très peu sensible à la lumière ambiante parasite comme par exemple la lumière du soleil.

Pour faire une image complète de la scène, selon l'état de l'art le lidar scanne séquentiellement la scène à l'aide d'un dispositif de balayage (image de type « rolling shutter »).

En pratique, il est difficile d'accéder à une acquisition des images de distance à cadence vidéo (typiquement 50Hz) pour des images de haute résolution (par exemple VGA ou XGA) car le temps disponible pour la mesure de distance en chaque point est très court.

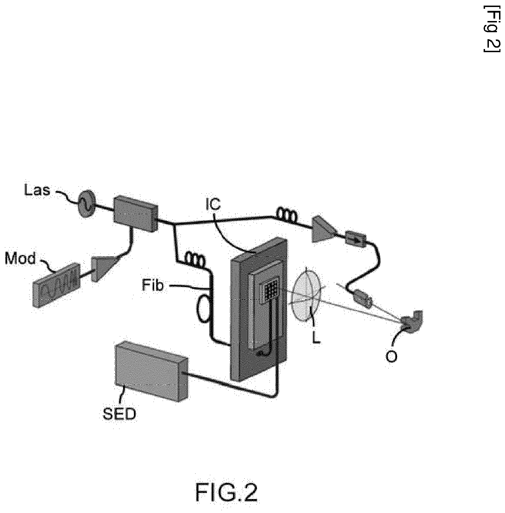

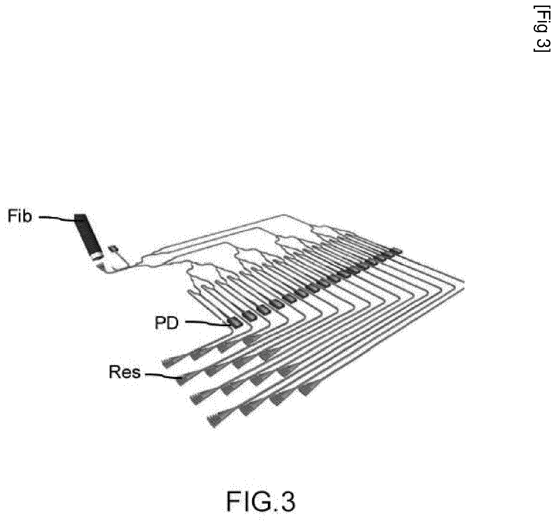

Au lieu de faire des mesures point par point, la publication Aflatouni « Nano photonic cohérent imager » (2015, Optics Express vol. 23 n°4, 5117), qui utilise également la technique FMCW, décrit un dispositif dans lequel toute la scène est illuminée simultanément par le faisceau laser qui a été rendu divergent, et la photo-détection est faite en parallèle pour l'ensemble de la scène. Dans cette publication (voir figure 2), la source laser Las est modulée en fréquence par un modulateur Mod, la voie objet illumine l'objet à analyser O et une lentille L forme l'image de l'objet sur un imageur cohérent IC réalisé en optique intégrée, plus précisément sur une matrice de 4×4 réseaux de couplage optique Res. Chaque réseau Res envoie la lumière couplée vers une photodiode PD à couplage latéral située en dehors de l'image, via un guide d'onde (voir figure 3). La voie de référence (onde LO oscillateur local) est directement envoyée sur les photodiodes par une fibre optique Fib et par un réseau de guides d'ondes et de jonctions Y. La conversion du photo-courant en tension est réalisée par un amplificateur trans-impédance TIA pour chacune des 16 photodiodes. Le filtrage électronique et le traitement des signaux sont effectués à l'extérieur de la puce dans un système électronique de détection SED.

Cette technique de détection de toute la scène en parallèle est plus appropriée en principe pour augmenter la cadence d'acquisition des images de distance. Cependant, dans l'architecture de l'imageur décrit dans la publication Aflatouni, la configuration de l'imageur cohérent n'est pas facilement extensible à un grand nombre de pixels. En outre le faisceau référence de l'oscillateur local est détourné avec une intensité constante une fois pour toutes et pour tous les pixels de l'imageur. Ce qui concrètement veut dire que le facteur d'amplification du signal scène par le signal LO est le même pour tous les pixels. Ceci peut dans certains cas être néfaste si le signal revenant de la scène est assez fort. Un photorécepteur est souvent caractérisé par un niveau maximum de signal avant saturation (appelé « full well » en anglais). Si le signal dépasse ce niveau maximum, on risque de perdre de l'information. Il existe des cas ou plusieurs pixels visent des distances différentes sur la scène et sont saturés. Tous ces pixels ne pourront pas être traités pour pouvoir remonter à une information de distance vu que le niveau de signal est le même pour tous (signal = full well).

Un but de la présente invention est de remédier aux inconvénients précités en proposant un système d'imagerie Lidar cohérent permettant l'acquisition en parallèle d'un nombre important de pixels et pour chaque pixel une détection améliorée au niveau de la gestion de la saturation du photo-détecteur et du ratio signal sur bruit.

## DESCRIPTION DE L'INVENTION

La présente invention a pour objet un système d'imagerie lidar cohérent comprenant :

- une source laser configurée pour émettre un rayonnement laser avec une fréquence optique modulée temporellement,

- un dispositif de détection comprenant une matrice de pixels, un pixel comprenant un composant photo-détecteur,

- un premier dispostif optique, dénommé séparateur, adapté pour séparer spatialement le rayonnement laser en un faisceau dit faisceau de référence et en un faisceau dit faisceau objet dirigé vers une scène à observer,

- un système optique d'imagerie présentant un axe optique et réalisant une image de la scène en imageant un faisceau objet réfléchi par la scène sur les pixels du dispositif de détection, une fraction du faisceau objet réfléchi par ladite scène et illuminant un pixel étant dénommée faisceau image pixel,

- un deuxième dispositif optique adapté pour acheminer une fraction du faisceau de référence, dénommée faisceau référence pixel, vers chaque photodétecteur,

  le deuxième dispostif optique et le système optique d'imagerie étant en outre configuré pour superposer, au niveau du composant photodétecteur d'un pixel et selon une direction de propagation sensiblement identique, le faisceau référence pixel et le faisceau image pixel, formant un faisceau recombiné pixel,

le composant photo-détecteur d'un pixel étant configuré pour générer un signal détecté pixel à partir du faisceau recombiné pixel, le signal détecté pixel présentant une intensité dénommée intensité totale pixel, l'intensité totale pixel comprenant une intensité modulée et une intensité constante,

le séparateur présentant une première transmittance variable identique pour tous les pixels et modulable,

le deuxième dispositif optique comprenant en outre au moins un modulateur d'intensité adapté pour moduler une intensité de chaque faisceau référence pixel en appliquant une transmittance pixel modulable,

- le système d'imagerie lidar cohérent comprenant en outre une unité de traitement configurée pour appliquer une valeur de première transmittance et, pour chaque pixel, une valeur de transmittance pixel, lesdites valeurs étant déterminées via une boucle d'asservissement et selon un critère d'optimisation, le critère d'optimisation comprenant l'obtention pour chaque pixel d'une intensité totale pixel inférieure à une intensité seuil, et l'obtention d'un rapport signal sur bruit amélioré,

le système d'imagerie lidar cohérent étant en outre configuré pour déterminer, pour chaque pixel, une fréquence d'un battement du faisceau recombiné.

Selon un mode de réalisation le ratio signal sur bruit pour un pixel correspond au ratio de l'intensité modulée intégrée sur un temps donné sur une racine carrée de l'intensité totale intégrée sur le même temps, le rapport signal sur bruit étant déterminé à partir des ratio signal sur bruit des pixels.

Selon un mode de réalisation le critère d'optimisation comprend en outre l'obtention, pour chaque pixel, d'une intensité totale ou d'une intensité modulée également améliorée.

Selon un mode de réalisation le critère d'optimisation comprend en outre l'obtention d'une dispersion des valeurs de ratio signal sur bruit pixel réduite.

Selon une première variante le faisceau référence se propage en espace libre, le deuxième dispositif optique comprenant un dispositif optique de recombinaison, dénommé combineur, configuré pour superposer le faisceau de référence et le faisceau image réfléchi par la scène,

le séparateur et le deuxième dispositif optique étant configurés pour former une image intermédiaire virtuelle ou réelle du faisceau de référence dans un plan perpendiculaire audit axe optique, dit plan image intermédiaire, ledit plan intermédiaire étant disposé de manière à générer des franges en teinte plate obtenues par interférence, sur chaque pixel éclairé, entre le faisceau référence pixel et le faisceau image pixel,

le modulateur d'intensité étant un composant matriciel pilotable électriquement positionné sur le trajet optique du faisceau de référence en aval du séparateur et en amont du deuxième dispositf optique.

Selon un mode de réalisation le deuxième dispositif optique comprend en outre un système optique intermédiaire adapté pour former ladite image intermédiaire et agencé après le séparateur et le composant matriciel et avant le combineur,
le système optique intermédiaire en combinaison avec le système optique d'imagerie étant en outre agencé pour former une image du composant matriciel sur le dispositif de détection.

Selon un mode de réalisation le séparateur est un filtre Fabry-Perot modulable électriquement.

Selon un mode de réalisation le composant matriciel est un modulateur à cristal liquide.

Selon un mode de réalisation le combineur présente une deuxième transmittance modulable identique pour tous les pixels, l'unité de traitement étant en outre configurée pour appliquer une valeur de deuxième transmittance via ladite boucle d'asservissement et selon ledit critère d'optimisation.

Selon une deuxième variante les pixels du détecteur sont répartis sur N colonnes et M lignes et au moins une partie du deuxième dispositif optique est intégré sur le détecteur et comprend :

- un guide optique dit guide référence configuré pour recevoir le faisceau de référence,

- N guides optiques, dits guides colonnes couplés au guide référence, et adaptés pour acheminer une partie du faisceau de référence dans les N colonnes du détecteur,

- chaque guide colonne étant couplé à M guides optiques, dits guides ligne, respectivement associés aux M pixels des M lignes du détecteur de ladite colonne, les M guides lignes étant configurés pour acheminer une partie du faisceau de référence dans chaque pixel de la colonne,

- et, dans chaque pixel du détecteur:

  - un guide optique de détection couplé au composant photo-détecteur,

  - un réseau de diffraction, dit réseau pixel, configuré pour coupler le faisceau image pixel vers le composant photo-détecteur,

  - un coupleur, dit coupleur pixel, configuré pour coupler, dans le guide de détection, le faisceau image pixel et le faisceau référence pixel, formant ainsi le faisceau recombiné,

- le deuxième dispositif optique comprenant un modulateur d'intensité intégré par pixel mis en série avec le guide ligne et disposé avant le coupleur pixel, et dont au moins une des branches est modulable.

Selon u mode de réalisation le modulateur d'intensité intégré est un anneau résonnant.

Selon un mode de réalisation le séparateur, le deuxième dispositif optique et le détecteur sont réalisés sur un même substrat, le séparateur comprenant un circuit optique intégré se subdivisant, via une jonction Y modulable, en d'une part au moins un guide d'onde comprenant au moins un réseau de diffraction, dit réseau objet, l'au moins un réseau objet étant configuré pour découpler une partie du faisceau laser du plan du circuit optique intégré de manière à former le faisceau objet, et en d'autre part un guide d'onde dépourvu de réseau guidant le faisceau de référence jusqu'au détecteur.

Selon un mode de réalisation le coupleur pixel est un coupleur directionnel modulable, de manière à faire varier un ratio entre le faisceau référence pixel et faisceau image pixel, l'unité de traitement étant en outre configurée pour appliquer une valeur de ratio via ladite boucle d'asservissement et selon ledit critère d'optimisation.

Selon un autre aspect l'invention concerne une méthode de détection et de traitement d'un signal issu d'un système d'imagerie lidar cohérent, le système d'imagerie lidar cohérent comprenant :

- une source laser configurée pour émettre un rayonnement laser avec une fréquence optique modulée temporellement,

- un dispositif de détection comprenant une matrice de pixels, un pixel comprenant un composant photo-détecteur,

- un premier dispositif optique, dénommé séparateur, adapté pour séparer spatialement le rayonnement laser en un faisceau dit faisceau de référence et en un faisceau dit faisceau objet dirigé vers la scène à observer,

- un système optique d'imagerie présentant un axe optique et réalisant une image de la scène en imageant un faisceau objet réfléchi par la scène sur les pixels du dispositif de détection, une fraction du faisceau objet réfléchi par ladite scène et illuminant un pixel étant dénommée faisceau image pixel,

- un deuxième dispositif optique adapté pour acheminer une fraction du faisceau de référence, dénommée faiseau référence pixel, vers chaque photodétecteur,

  le deuxième dispostif optique et le système optique d'imagerie étant en outre configuré pour superposer, au niveau du composant photodétecteur d'un pixel et selon une direction de propagation sensiblement identique, le faisceau référence pixel et le faisceau image pixel, formant un faisceau recombiné pixel,

  le séparateur présentant une première transmittance variable identique pour tous les pixels et modulable,

  le deuxième dispositif optique comprenant en outre au moins un modulateur d'intensité adapté pour moduler une intensité de chaque faisceau référence pixel en appliquant une transmittance pixel modulable,

  la méthode comprenant les étapes consistant à :

  A générer un signal détecté pixel à partir du faisceau recombiné pixel, le signal détecté pixel présentant une intensité dénommée intensité totale pixel, l'intensité totale pixel comprenant une intensité modulée et une intensité constante,

  B appliquer, à chaque faisceau de référence pixel, une valeur de transmittance pixel

**C** appliquer au faisceau de référence une valeur de première transmittance,

lesdites valeurs étant déterminées via une boucle d'asservissement et selon un critère d'optimisation, le critère d'optimisation comprenant, pour chaque pixel l'obtention d'une intensité totale pixel inférieure à une intensité seuil et l'obtention d'un rapport signal sur bruit amélioré,

**D** déterminer, pour chaque pixel, une fréquence d'un battement du faisceau recombiné.

Selon un mode de réalisation la méthode comprend en outre une étape **C'** consistant à appliquer une valeur de ratio entre le faisceau référence pixel et faisceau image pixel, ladite valeur de ratio étant déterminée par la dite boucle d'asservissement.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

[Fig 1] La figure 1 déjà citée illustre le principe d'un lidar à modulation de fréquence FMCW.

[Fig 2] La figure 2 déjà citée illustre une architecture FMCW partiellement intégrée selon l'état de l'art.

[Fig 3] La figure 3 déjà cité illustre la recombinaison cohérente réalisée par le système décrit figure 2.

[Fig 4] La figure 4 illustre une architecture d'un système lidar en espace libre.

[Fig 5] La figure 5 illustre une architecture d'un système lidar intégré.

[Fig 6] La figure 6 illustre le détecteur du lidar de la figure 5

[Fig 7] La figure 7 illustre un mode de réalisation du lidar de la figure dans lequel le dispositif de couplage et le détecteur intégré sont réalisés sur un même substrat.

[Fig 8] La figure 8 illustre la détection, par pixel, de la superposition d'un faisceau référence pixel et d'un faisceau image pixel générant un flux de photons total.

[Fig 9] La figure 9 illustre certaines grandeurs intervenant dans la quantité de flux collectée par chaque photo-détecteur dans l'architecture décrite figure 4.

[Fig 10] la figure 10 illustre la variante du lidar selon l'invention avec la propagation en espace libre du faisceau référence.

[Fig 11] La figure 11 décrit un algorithme d'optimisation implémenté dans un lidar selon l'invention.

[Fig 12] La figure 12 illustre un algorithme d'optimisation implémenté dans un lidar selon l'invention intégrant la modulation additionnelle de la deuxième transmittance et la réduction de la dispersion.

[Fig 13] La figure 13 présentent les résultats d'optimisation des valeurs de T1, T2 et x respectivement pour le pixel 1 P1, sous forme de tableaux, en suivant la procédure d'optimisation du SNR sous contrainte de non saturation des pixels, en disposant de T1 et T2 variable et en considérant T1=T2, et en cherchant également à maximiser l'intensité pixel.

[Fig 14] La figure 14 présentent les résultats d'optimisation des valeurs de T1, T2 et x respectivement pour le pixel 2 P2, sous forme de tableaux, en suivant la procédure d'optimisation du SNR sous contrainte de non saturation des pixels, en disposant de T1 et T2 variable et en considérant T1=T2, et en cherchant également à maximiser l'intensité pixel.

[Fig 15] La figure 15 illustre sur sa partie gauche le tracé 2D du signal pour le pixel 1 en fonction de valeurs de T1, T2 et de x(P1) et sur sa partie droite une coupe dans la diagonale T1=T2 de la figure de la partie gauche correspondante, à différentes étapes a) à d) de l'optimisation.

[Fig 16] La figure 16 illustre sur sa partie gauche le tracé 2D du signal pour le pixel 1 en fonction des mêmes valeurs de T1, T2 et de x(P1) que pour la figure 15, et sur sa partie droite une coupe dans la diagonale T1=T2 de la figure de la partie gauche correspondante, à différentes étapes a) à d) de l'optimisation.

[Fig 17] La figure 17 illustre la réponse spectrale du filtre de Fabry-Perot.

[Fig 18] La figure 18 illustre un mode de réalisation du lidar selon l'invention en espace libre dans lequel le deuxième dispositif optique comprend un système optique intermédiaire.

[Fig 19] La figure 19 illustre un lidar selon l'invention présentant une architecture intégrée.

[Fig 20] La figure 20 illustre un modulateur d'intensité intégré de type interféromètre Mach-Zender.

[Fig 21] La figure 21 illustre un modulateur d'intensité intégré de type anneau résonnant.

[Fig 22] La figure 22 illustre un coupleur directionnel présentant sur une des branches un zone de couplage modulée thermiquement (partie inférieure a)) ou par injection de porteurs (partie supérieure b)).

[Fig 23] La figure 23 illustre un mode de réalisation du lidar intégré selon l'invention illustré dans lequel le séparateur, le deuxième dispositif optique et le détecteur sont réalisés sur un même substrat.

[Fig 24] La figure 24 illustre un mode de réalisation de la jonction modulable, de type coupleur à onde évanescente.

[Fig 25] La figure 25 illustre un coupleur à onde évanescente dans lequel la zone de couplage est modulée par voie thermique tel qu'illustré figure 25 a), ou par injection de porteurs (une diode PIN par exemple) tel qu'illustré figure 25 b).

## DESCRIPTION DETAILLEE DE L'INVENTION

Le système d'imagerie Lidar cohérent selon l'invention est basé sur des architectures lidar décrites dans les demandes de brevets FR2000408 et FR2005186, non publiées à la date de dépôt de la présente demande. Ces deux types d'architectures de système Lidar cohérent permettent l'acquisition d'un nombre importants de pixels en parallèle. Ces architectures comprennent un détecteur matriciel (ou imageur) dans lequel chaque pixel comprend un photorécepteur. Le système lidar décrit dans le document FR2000408 est basé sur une propagation en espace libre du faisceau référence (oscillateur local) et sera dénommé système lidar en espace libre, et le lidar décrit dans le document FR2005186 est basé sur une propagation en optique guidée du faisceau de référence, et sera dénommé système lidar intégré.

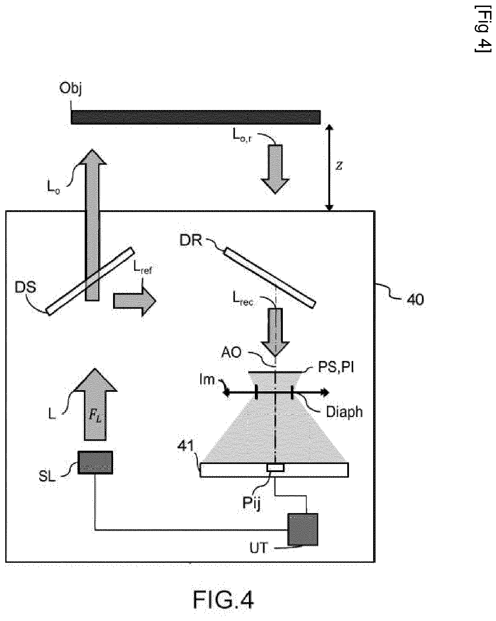

L'architecture du système lidar en espace libre 40 est rappelée figure 4. Le lidar est de type FMCW et comprend une source laser SL configurée pour émettre un rayonnement laser L avec une fréquence optique FL modulée temporellement. Préférentiellement la fréquence optique est modulée par une rampe périodique d'excursion B et de durée T, et la longueur de cohérence du rayonnement laser est au moins deux fois supérieure à la distance prédéterminée maximale zmax entre la scène à observer Obj et le lidar 40.

Le lidar 40 comprend également un dispositif optique DS, dit séparateur, adapté pour séparer spatialement le rayonnement laser L en un faisceau dit faisceau de référence Lref et en un faisceau dit faisceau objet Lo dirigé vers la scène à observer Obj et un dispositif optique de recombinaison DR, dénommé combineur, adapté pour superposer spatialement le faisceau de référence Lref au faisceau réfléchi par la scène Lo,r, de manière à former un faisceau recombiné. Lrec.

Le lidar 40 comprend également un dispositif de détection matriciel 41 et un système optique d'imagerie Im d'axe optique AO (diaphragme Diaph) qui réalise une image de la scène en imageant le faisceau réfléchi par la scène Lo,r sur le détecteur 41. La scène étant typiquement à l'infini, le détecteur 41 est placé sensiblement dans le plan focal de l'optique Im. Le détecteur matriciel 41 comprend une matrice de pixels Pij, chaque pixel comprenant un composant photo-détecteur PD(i,j). Le photo-détecteur PD détecte un flux de photons, qu'il transforme en un flux d'électrons.

Les dispositifs optiques DS et DR et le système optique d'imagerie Im sont configurés de sorte que chaque pixel Pij du détecteur reçoive une portion du faisceau image issu de scène dénommée Lo,r/pix et une portion du faisceau de référence dénommée Lref/pix, et que les portions soient superposées spatialement de manière cohérente sur chaque pixel. Préférentiellement les dispositifs DS et DR sont configurés, par exemple avec l'ajout d'une optique additionnelle SI (non représentée), pour transporter le faisceau de référence de façon cohérente depuis la source laser jusqu'à un plan image intermédiaire PI, perpendiculaire à l'axe optique AO du système optique d'imagerie Im, de façon à réaliser une source de référence cohérente (virtuelle ou réelle) avec le faisceau réfléchi. Le plan intermédiaire PI est situé à proximité du système optique d'imagerie, de manière à générer des franges en teinte plate, obtenues par interférence entre la portion du faisceau réfléchi détectée Lo,r/pix et la portion du faisceau de référence détectée Lref/pix, sur chaque pixel Pij éclairé. Pour simplifier on assimile la portion de faisceau illuminant un pixel à la portion de faisceau détectée par le photo-détecteur de ce pixel. Cette condition de teinte plate implique que, sur chaque pixel Pij, un axe de propagation de la portion Lo,r/pix du faisceau réfléchi soit colinéaire ou sensiblement colinéaire à un axe de propagation de la portion Lref/pix du faisceau de référence. Les dispositifs DS, DR et SI sont donc configurés pour former une image intermédiaire PS virtuelle ou réelle du faisceau de référence dans le plan image intermédiaire PI, le plan PI étant disposé de manière à générer des franges en teinte plate, obtenues par interférence entre les portions, sur chaque pixel éclairé.

Le système d'imagerie lidar cohérent 40 comprenant en outre au moins un circuit électronique de traitement configuré pour calculer, pour chaque pixel Pij, une fréquence F(i,j) du battement de la portion du faisceau image avec la portion du faisceau de référence illuminant le pixel.

Enfin le lidar 40 comprend une unité de traitement UT reliée à la source laser et au détecteur 41, et configurée pour déterminer une distance de points de la scène imagés sur les pixels, à partir de la fréquence de battement calculée et associée à chaque pixel et à partir de la fréquence optique modulée du rayonnement laser. Le circuit de traitement peut être localisé dans chaque pixel, selon une ligne ou une colonne, ou dans l'unité de traitement UT.

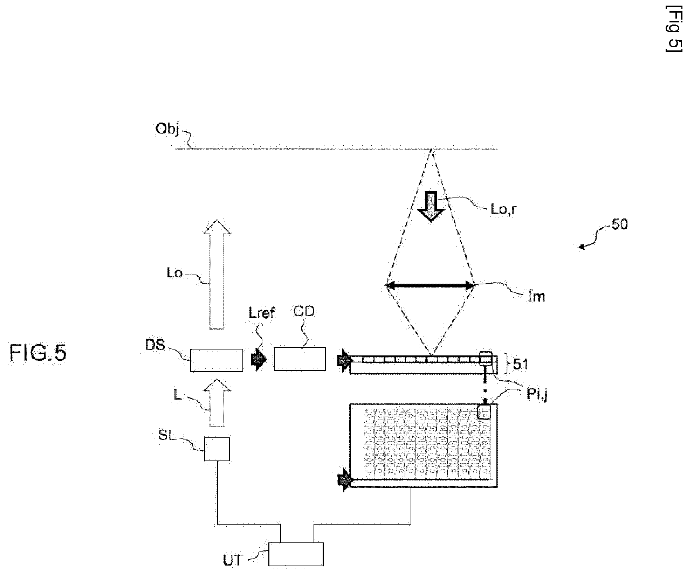

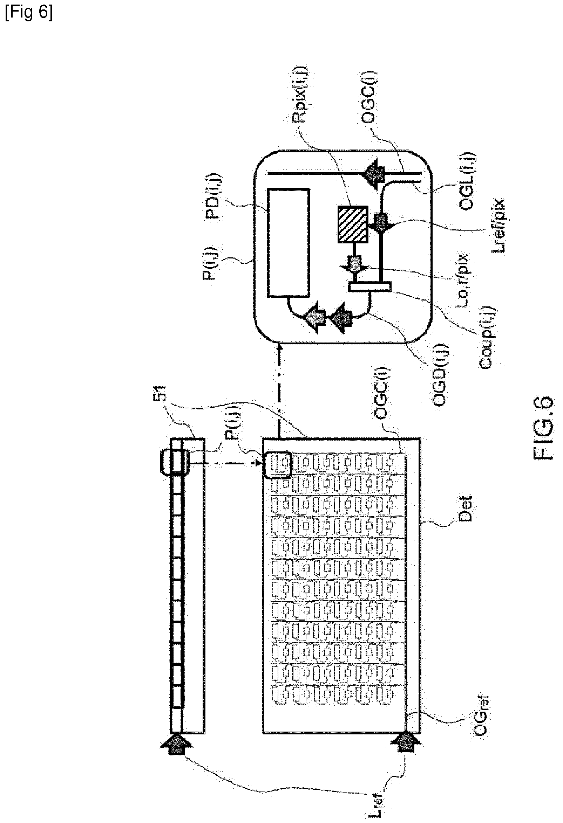

L'architecture du système lidar intégré 50 est rappelée figure 5. Le lidar est également de type FMCW et comprend une source laser SL et un dispositif séparateur DS tels que décrit précédemment. Il comprend également un détecteur 51 comprenant une matrice de pixels Pij répartis sur N colonnes (indice i) et M lignes (indice j), différent du détecteur 41, et décrit figure 6. Ici le faisceau de référence ne se propage pas en espace libre mais est directement injecté (via un dispositif de couplage CD) dans le détecteur matriciel. Le système optique d'imagerie Im image toujours la scène sur le détecteur 51 mais n'est plus traversé, au moins partiellement, par le faisceau de référence Lref.

Le détecteur 51 comprend un guide optique dit guide référence OGref configuré pour recevoir le faisceau de référence Lref. Il comprend également N guides optiques OGC(i), dits guides colonnes, couplés au guide référence OGref, et adaptés pour acheminer une partie du faisceau de référence dans les N colonnes du détecteur. Chaque guide colonne i est couplé à M guides optiques OGL(i,j), dits guides ligne, respectivement associés aux M pixels des M lignes (indicées j) du détecteur de la colonne i. Les M guides lignes sont configurés pour acheminer une partie du faisceau de référence dans chaque pixel de la colonne. La partie du faisceau de référence arrivant dans chaque pixel est dénommée faisceau référence pixel Lref/pix. Les indices (i,j) ou l'indice pix désignant de manière identique ce qui attrait au pixel P(i,j). Préférentiellement le couplage entre le guide de référence OGref et les N guides colonnes, ainsi que le couplage entre chaque guide colonne et les M guides lignes associés, est de type évanescent. Pour la répartition dans les N colonnes le coefficient de couplage est préférentiellement prévu croissant entre la première et la dernière colonne pour assurer une intensité lumineuse similaire dans chaque colonne. Le même principe peut être répété sur chacune des colonnes pour alimenter les M guides associés aux M pixels en ligne situés le long de cette colonne.

Chaque pixel P(i,j) du détecteur intégré comprend un composant photodétecteur PD(i,j), typiquement une photodiode guidée, couplé à un guide optique de détection OGD(i,j).

Un pixel comprend également un réseau de diffraction, dit réseau pixel Rpix(i,j), configuré pour coupler une portion du faisceau illuminant le pixel (provenant de la scène via le système optique d'imagerie), vers la photodiode guidée PD(i,j). Cette portion est dénommée faisceau image pixel Lo,r/pix, Le réseau pixel est par exemple un réseau gravé en surface d'un guide d'onde.

Un pixel comprend également un coupleur, dit coupleur pixel Coup(i,j), configuré pour coupler, dans le guide de détection OGD(i,j), le faisceau image pixel Lo,r/pix et le faisceau référence pixel Lref/pix.

Avec cette configuration la photodiode guidée PD(i,j) est ainsi configurée pour recevoir le faisceau image pixel Lo,r/pix et le faisceau référence pixel Lref/pix. La lumière est couplée dans la photodiode selon une méthode classique, par un couplage en bout (« butt coupling » en anglais) ou par un couplage évanescent. Les deux faisceaux reçus par la photodiode interfèrent comme expliqué plus haut.

Enfin un pixel comprend un circuit électronique de lecture et de prétraitement du signal détecté par la photodiode, le prétraitement comprenant une amplification et un filtrage.

Un pixel du détecteur 51 est ainsi composé de composants optiques intégrés (guides, réseau, coupleur) et électroniques intégrés (photodiode).

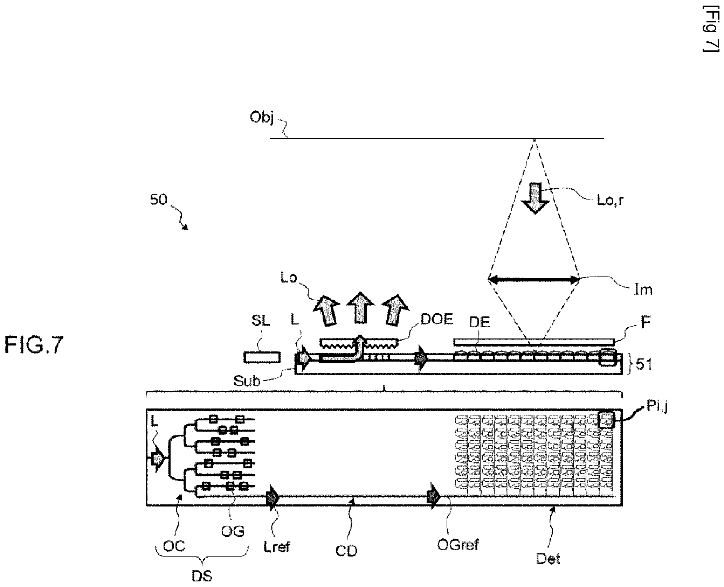

Selon un mode de réalisation du lidar 50 illustré figure 7 le dispositif séparateur DS, le dispositif de couplage CD et le détecteur intégré 51 sont réalisés sur un même substrat Sub. Cela permet d'éviter les pertes de flux liées au transport et couplage du faisceau laser au détecteur. Le dispositif séparateur comprend un circuit optique intégré OC se subdivisant en une pluralité de guides d'onde comprenant chacun au moins un réseau de diffraction, dit réseau objet OG, les réseaux objets étant configurés pour découpler une partie du faisceau laser du plan du circuit optique intégré de manière à former le faisceau objet, et en au moins un guide d'onde dépourvu de réseau guidant le faisceau de référence jusqu'au détecteur, et constituant le dispositif de couplage. Il s'agit typiquement de OGref qui s'étend depuis le circuit OC jusqu'au détecteur.

En option le lidar comprend également un système de projection pour projeter la lumière sur une zone prédéterminée de la scène à observer dont on va ensuite former l'image sur le détecteur, donc typiquement une zone rectangulaire. De préférence, le système optique de projection éclaire la scène selon un cône d'ouverture angulaire sensiblement égale à l'angle de champ du système optique d'imagerie (qui est déterminé par sa distance focale et la taille du détecteur). Ainsi, quelle que soit la distance de la scène, son image correspond à la taille du détecteur. Le système optique de projection est préférentiellement adapté pour éclairer la zone prédéterminée de la scène de façon uniforme pour assurer par la suite un éclairement et un rapport signal sur bruit uniforme sur le détecteur si la scène est lambertienne.

En option le lidar comprend également un dispositif optique de mise en forme, par exemple un DOE (Diffractive Optical Element) constitué de motifs périodiques avec une période de l'ordre de la longueur d'onde du rayonnement laser, qui est agencé entre le circuit OC et la scène, afin de permettre d'améliorer l'uniformité de l'illumination.

En option le lidar 40 ou 50 comprend un filtre F pour couper la lumière parasite.

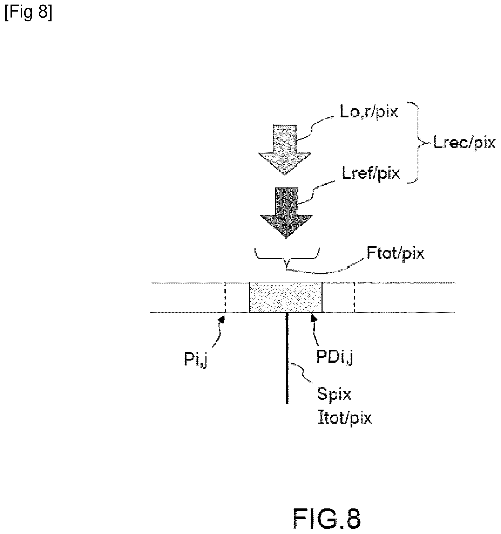

Ces deux architectures sont toutes deux basées sur une détection, par pixel, de la superposition d'un faisceau référence pixel Lref/pix et un faisceau image pixel Lo,r/pix, générant un flux de photons total $F_{TOT}$, tel qu'illustré figure 8. Le fait de disposer d'un oscillateur local pour chaque pixel permet d'avoir une image de chaque point de la scène quasi instantanément. Ainsi les architectures respectives des lidars 40 et 50 intégrant un détecteur matriciel sont compatibles d'un grand nombre de pixels (pas de balayage) permettant de réaliser une image lidar à haute résolution. Le fait que chaque pixel comprenne sa photodiode permet de considérablement diminuer les problèmes de routage de faisceaux et d'encombrement par de multiples guides d'onde, contrairement à l'architecture de Aflatouni. Le mélange hétérodyne s'effectue ici dans chaque pixel.

Cependant dans ces systèmes 40 et 50 le faisceau référence de l'oscillateur local est toujours détourné avec une intensité constante une fois pour toutes et pour tous les pixels de l'imageur, ce qui entraîne des problèmes de saturation de certains photo-détecteurs et un rapport signal sur bruit pouvant être très faible.

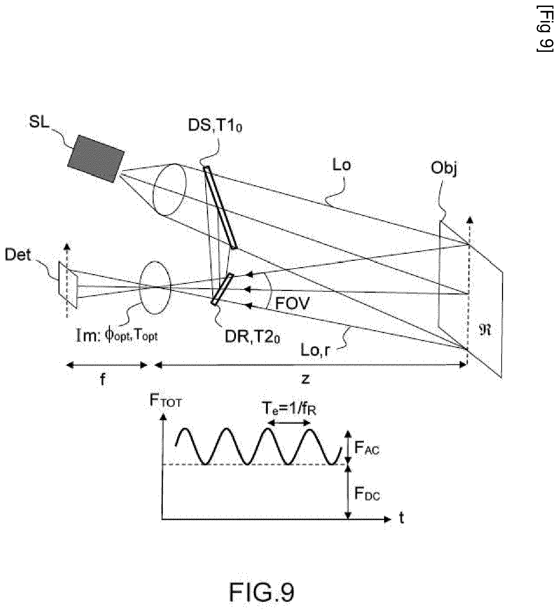

La figure 9 illustre certaines grandeurs intervenant dans la quantité de flux collectée par chaque photo-détecteur dans les architectures décrites ci-dessus. On désigne par Det le détecteur.

Le flux total de photons $F_{TOT/pix}$ qui atteint un photo-détecteur PD comprend une composante utile d'amplitude $F_{AC/pix}$ modulée à la fréquence $f_R$ telle que définie plus haut et correspondant aux interférences entre Lref/pix et Lo,r/pix, et une composante continue $F_{DC/pix}$. On a :

$$F_{tot/pix} = F_{DC/pix} + F_{AC/pix}$$

Avec

$$F_{AC/pix} = F_{AC0/pix} \cos^2(\pi f_R t + \varphi)$$

Le calcul des interférences donne $F_{AC/pix} \propto 4\sqrt{\rho_{S(i,j)}\rho_{L0}}F_t$

$F_t$ est le flux de photons du faisceau laser avant séparation en deux voies scène et signal,

$\rho_{s(i,j)}$ est la fraction du flux de photons passée par la voie de la scène et statistiquement incidente sur un pixel de l'imageur,

$\rho_{L0}$ est la fraction du flux de photons passée par la voie oscillateur local et statistiquement incidente sur un pixel de l'imageur.

Avec :

$$\rho_{S(i,j)} = \frac{R(i,j).T1_0.T2_0.T_{opt}.\emptyset_{opt}^2}{4NMz(i,j)^2} \qquad (1)$$

et

$$\rho_{L0} = \frac{(1-T1_0).(1-T2_0).T_{opt}}{NM}, \qquad (2)$$

où :

*R(i,j)* est la réflectance diffuse de la scène, qui dépend du point de la scène considéré

$T1_0$ est la transmission du séparateur DS

$T2_0$ est la transmission du combineur DR

$T_{opt}$ est la transmission du système optique d'imagerie Im

$\Phi_{opt}$ est le diamètre de la pupille du système optique d'imagerie Im

N et M sont les nombres de pixels de l'imageur dans les directions x et y du détecteur matriciel

Cette modélisation s'applique également à l'architecture intégrée en adaptant les valeurs de $T1_0$ et $T2_0$ aux composants optiques intégrés. Dans ce cas le faisceau oscillateur local ne passe par l'optique Im.

Toutes ces grandeurs sont fixes, l'intensité totale détectée par chaque pixel et sa fraction utile sont imposées par les caractéristiques des différents éléments optiques qui composent ces architectures et par les conditions expérimentales liées à la scène observée.

Pour améliorer les systèmes décrits précédemment, le lidar selon l'invention intègre un module optique intelligent agissant sur faisceau référence Lref (oscillateur local), afin que chaque signal reçu par un pixel de l'imageur et issu de la scène, puisse être amplifié individuellement par un oscillateur local ajusté, pour d'une part ne pas saturer chaque photorécepteur de l'imageur et d'autre part avoir le meilleur rapport signal sur bruit SNR.

Le système d'imagerie lidar cohérent selon l'invention est compatible des deux architectures précitées, en espace libre et intégrée, et comprend donc :

- une source laser SL configurée pour émettre un rayonnement laser L avec une fréquence optique $F_L$ modulée temporellement,

- un dispositif de détection Det comprenant une matrice de pixels P, un pixel Pij comprenant un composant photo-détecteur PD(i,j),

- un premier dispositif optique, dénommé séparateur DS, adapté pour séparer spatialement le rayonnement laser L en un faisceau dit faisceau de référence $L_{ref}$ et en un faisceau dit faisceau objet $L_o$ dirigé vers une scène à observer Obj,

- un système optique d'imagerie Im présentant un axe optique AO et réalisant une image de la scène en imageant un faisceau objet réfléchi par la scène Lo,r sur les pixels du dispositif de détection, une fraction du faisceau objet réfléchi par la scène et illuminant un pixel étant dénommée faisceau image pixel Lo,r/pix,

- un deuxième dispositif optique D2 adapté pour acheminer une fraction du faisceau de référence, dénommée faiseau référence pixel Lref/pix, vers chaque photodétecteur.

Le deuxième dispositif optique D2 et le système optique d'imagerie Im sont en outre configuré pour superposer, au niveau du composant photodétecteur d'un pixel et selon une direction de propagation sensiblement identique, le faisceau référence pixel Lref/pix et le faisceau image pixel Lo,r/pix, formant un faisceau recombiné pixel Lrec/pix.

Le composant photo-détecteur d'un pixel transforme le flux de photons en un flux proportionnel d'électrons avec un rendement quantique donné. Le composant photo-détecteur est configuré pour générer un signal détecté pixel Spix à partir du faisceau recombiné pixel, le signal détecté pixel présentant une intensité dénommée intensité totale pixel $I_{tot/pix}$ (voir figure 8). Le détecteur présente un rendement quantique, et le signal détecté électronique est proportionnel au flux de photons incident sur le détecteur. Dans la suite pour un pixel le terme signal (détecté) et le terme intensité (totale) sont utilisés de manière équivalente.

Le système d'imagerie lidar cohérent est en outre configuré pour déterminer, pour chaque pixel, une fréquence F(i,j) d'un battement du faisceau recombiné.

Le système d'imagerie lidar cohérent 30 comprenant en outre une unité de traitement UT configurée pour déterminer, pour chaque pixel, une distance de points de la scène imagés sur lesdits pixels (et le cas échéant une vitesse) à partir de la fréquence de battement associée à chaque pixel et à partir de la fréquence optique modulée du rayonnement laser.

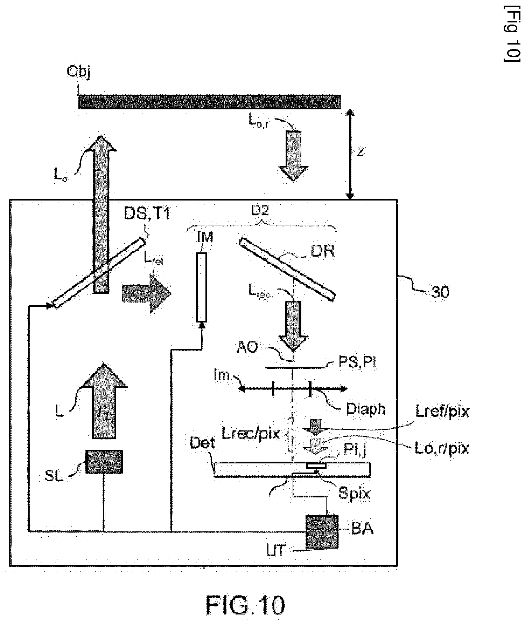

La variante du lidar 30 selon l'invention avec la propagation en espace libre du faisceau référence est illustrée figure 10.

Dans cette variante le faisceau de référence traverse également l'optique IM, qui participe à son acheminement vers les pixels du détecteur.

Dans le lidar selon l'invention le séparateur DS du lidar 30 du séparateur présente une première transmittance variable T1 identique pour tous les pixels et modulable. Contrairement au séparateur des architectures précédentes, il est possible ici de modifier le rapport relatif entre la fraction du rayonnement laser émis F qui constitue le faisceau de référence Lref et la fraction qui illumine la scène Lo.

Pour un séparateur DS de type lame séparatrice ou cube séparateur il est entendu qu'une modulation de la transmisison induit automatiquement une modulation de la réflexion du séparateur DS, de sorte que la somme soit proche de 1 (les pertes de ce type de composant sont faibles). Préférentiellement ici la transmittance T1 est modulable électriquement.

Le deuxième dispositif optique D2 du lidar 30 comprend, outre le combineur DR, au moins un modulateur d'intensité IM adapté pour moduler l'intensité de chaque faisceau référence pixel Lref/pix en appliquant une transmittance pixel modulable. Le modulateur IM est composant matriciel dénommé SLM (pour « spatial light modulator) pilotable électriquement, positionné sur le trajet optique du faisceau de référence Lref en aval du séparateur DS et en amont du dispositif combineur DR.

L'unité de traitement UT est configurée pour appliquer une valeur de première transmittance T1 et, pour chaque pixel, une valeur de transmittance pixel xij, ces valeurs étant déterminées via une boucle d'asservissement et selon un critère d'optimisation. Typiquement la boucle d'asservissement est implémentée dans l'unité de traitement mais selon un mode de réalisation au moins une partie est implémentée sur le détecteur. On dénomme paramètres de l'optimisation T1 et xij, et on entend par critère d'optimisation l'application d'une condition à des grandeurs physiques. Le critère d'optimisation comprend pour chaque pixel, l'obtention d'une intensité totale pixel $I_{tot/pix}$ inférieure à une intensité seuil Is et d'un rapport signal sur bruit SNR amélioré, ce qui signifie augmenté, par rapport à la valeur initiale.

Comme illustré plus loin les composants permettant la mise en oeuvre du lidar 30 selon l'invention sont différents selon le type d'architecture, mais présentent une fonctionnalité similaire. On modifie le facteur de transmission, et donc de réflexion du séparateur en fonction de la quantité de lumière rétrodiffusée qui revient de la scène. On modifie également le facteur d'amplification individuel pour chaque photorécepteur de l'imageur en introduisant une modulation d'intensité pixelisée sur le parcours de l'oscillateur local.

Le module optique intelligent est constitué du séparateur variable DS et du modulateur IM. Ces deux composants sont asservis par un signal électrique provenant de l'imageur comprenant tous les signaux Spix détectés. Le signal reçu par chaque pixel dépend maintenant de T1 variable et du paramètre $x_{ij}$ compris entre la valeur 0 (pas de transmission) et 1 (transmission complète).

On adapte la transmission/réflexion globale du séparateur et localement on ajuste l'intensité de l'oscillateur local pour chaque pixel de l'imageur. Par ce biais et via l'asservissement on s'arrange pour ne pas avoir de photodétecteur saturé et avoir un compromis optimum entre signal et SNR. Préférentiellement on optimise T1 et xij en temps réel afin d'avoir le meilleur rapport SNR tout en n'ayant aucun pixel saturé.

L'intensité totale détectée pour un pixel $I_{tot/pix}$ est proportionnelle au flux de photons total $F_{tot}$ et se décompose en une intensité modulée $I_{ACpix}$ et une intensité constante $I_{DCpix}$ définis comme suit :

$$I_{AC/pix(i,j)} \propto 4 \cdot \sqrt{\rho_S(i,j)\rho_{LO}(i,j)}F_t \cdot \cos^2(\pi f_R t + \varphi)$$

$$I_{DC/pix(i,j)} \propto \left(\sqrt{\rho_S(i,j)} - \sqrt{\rho_{LO}(i,j)}\right)^2 \cdot F_t$$

Avec

$$\rho_{S(i,j)} = \frac{\mathcal{R}ij.T1.T2_0.T_{opt}\phi_{opt}^2}{4.N.M.z_{ij}^2} \qquad (3)$$

à présent fonction de T1 variable, et :

$$\rho_{LO}(i,j) = \frac{x_{ij}\cdot(1-T1)\cdot(1-T2_0)\cdot T_{opt}}{N.M} \qquad (4)$$

à présent fonction du pixel (i,j) et de T1.

L'intensité totale se définit par l'intégration, sur un temps d'intégration déterminé Tint, de la somme de l'intensité modulée et de l'intensité continue :

$$I_{total/pix(i,j)} = \int_0^{Tint} (I_{AC/pix(i,j)} + I_{DC/pix(i,j)})\, dt \qquad (5)$$

Préférentiellement, et dans le cas assez général où le bruit dominant est le bruit de photons, le ratio signal sur bruit $SNR_{pix}$ pour un pixel se définit comme le ratio entre l'intensité modulée intégrée sur le temps Tint et la racine carrée de l'intensité totale intégrée sur le même temps :

$$SNR_{pix(i,j)} = \frac{\int_0^{Tint} I_{AC/pix(i,j)}\, dt}{\sqrt{I_{total/pix(i,j)}}} \qquad (6)$$

Préférentiellement on a :

$$Tint = \frac{Te}{N} \; avec \; N \geq 3 \; et \; Te = \frac{1}{f_{max}}$$

avec $f_{max}$ tel que :

$$f_{max} = \frac{2Bz_{max}}{cT}$$

$z_{max}$ distance maximale visée par le système.

Le rapport signal sur bruit SNR de la détection utilisé pour l'optimisation est déterminé à partir des $SNR_{pix}$ des pixels du détecteur, et peut être défini de différentes manières.

Selon un mode de réalisation il s'agit d'un rapport signal sur bruit moyen défini comme la moyenne des $SNR_{pix}$ des pixels du détecteur.

SNR = <$SNR_{pix}$>

Par exemple la moyenne est arithmétique, ou égale à la médiane.

Selon un autre mode de réalisation le SNR correspond au minimum des $SNR_{pix}$ et l'optimisation consiste à augmenter ce minimum.

SNR = min($SNR_{pix}$)

Une fois les calculs d'intensité et de SNR effectués pour l'asservissement, selon une option connue de l'homme de l'art un circuit de traitement de chaque pixel effectue un filtrage de la composante continue et une amplification de la partie modulée du signal détecté.

Le critère d'optimisation comprend deux conditions :

Une première condition est que $I_{tot/pix}$ < Is pour tous les pixels du détecteur Det. Une deuxième condition est l'augmentation du SNR par rapport à sa valeur initiale, sous la contrainte de la première condition. Différents algorithmes connus peuvent être utilisés pour la mise en oeuvre de l'optimisation, tels que le Newton ou le génétique.

En cherchant simplement à sortir de la saturation tout en améliorant le SNR il est possible d'obtenir pour certains pixels une intensité totale assez faible ou une intensité modulée diminuée. Pour y remédier préférentiellement le critère d'optimisation comprend en outre une troisième condition qui est l'obtention, pour chaque pixel, d'une intensité totale ou d'une intensité modulée également améliorée.

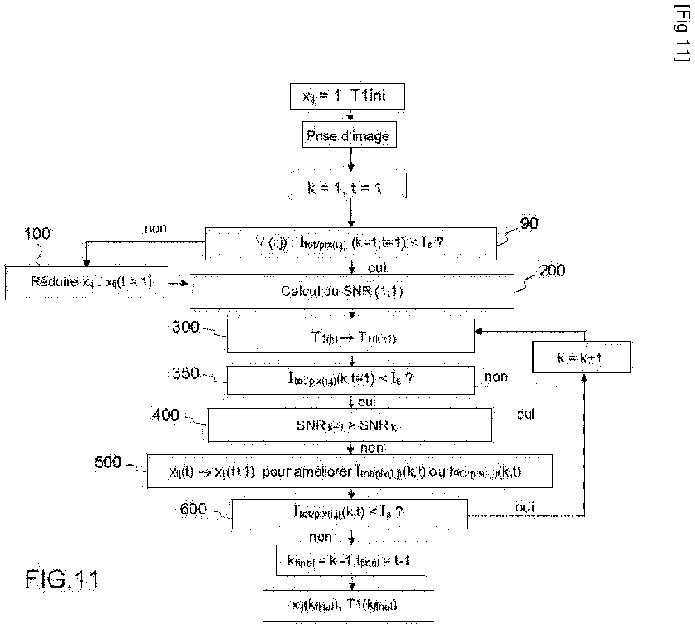

La figure 11 présente un exemple d'un algorithme intégrant cette dernière condition.

On initialise xij à 1 et T1 à une valeur T1ini. Après la détection d'une première image (k=1, t=1), le modulateur d'intensité spatial IM affecte des valeurs xij individuelles pour chaque pixel de l'imageur afin de n'avoir aucune saturation sur l'image (étapes 90 et 100). Les SNR de tous les pixels $SNR_{pix}$ sont calculés puis une fonction SNR (moyenne, médiane, min..) dépendante de ces $SNR_{pix}$ est déterminée (étape 200). La valeur de T1 est ensuite ajustée afin d'augmenter cette fonction SNR tout en veillant à ne pas provoquer de saturation : tant que l'on peut augmenter SNR tout en n'ayant aucun pixel saturé on reboucle (étapes 300, 350 et 400 double boucle sur k et t).

Dans une étape 500 on cherche localement à regagner en valeur d'intensité (totale ou modulée) en ré-augmentant les xij, toujours en restant sous la saturation (étape 600).

On obtient à la sortie des valeurs de xij(final) pour tous les pixels ainsi qu'une valeur T1 (final) optimisée.

A la fin de la procédure d'asservissement on obtient une valeur de T1 finale et une matrice de valeurs xij correspondantes à chaque pixel Pij avec le meilleur SNR. La philosophie générale de l'optimisation est d'abord d'ajuster xij pour éviter toute saturation, puis adapter T1 pour augmenter le SNR tout en restant sous la saturation, puis une fois la valeur maximale de SNR obtenue, réajuster localement xij pour augmenter $I_{tot/pix}$ ou $I_{AC/pix}$ lorsque c'est possible.

Selon une variante du lidar 30 selon l'invention dans la variante en espace libre, le combineur DR présente également une deuxième transmittance modulable T2 identique pour tous les pixels, l'unité de traitement étant en outre configurée pour appliquer une valeur de deuxième transmittance via la boucle d'asservissement BA et selon le critère d'optimisation. Préférentiellement la transmittance T2 est modulable électriquement. L'optimisation s'effectue donc via trois paramètres T1, T2 et xij. Il convient dans ce cas de modifier les formules de $\rho_{s(i,j)}$ et de $\rho_{LO(i,j)}$ (3) et (4) en remplaçant $T2_0$ par T2 variable.

En modulant T2 on module en fait le % relatif ou ratio entre le faisceau référence et le faisceau objet qui vont se recombiner. Disposer de ce paramètre additionnel dans la boucle d'asservissement permet d'obtenir une meilleure optimisation. Préférentiellement dans l'optimisation la modification de T2 est opérée en même temps que celle de T1.

Les inventeurs ont par ailleurs démontré (voir plus loin) qu'une optimisation performante est obtenue en posant T1=T2. Selon cette variante qui pose T1=T2 l'optimisation s'effectue à nouveau sur deux paramètres T1=T2 et xij, ce qui permet une meilleure optimisation sans complexifier l'algorithme.

Selon un mode de réalisation, qui peut être combiné à la variante ci-dessus, le critère d'optimisation comprend en outre l'obtention d'une dispersion des valeurs de signal sur bruit pixel réduite. On définit σSNR la dispersion des $SNR_{pix}$ .

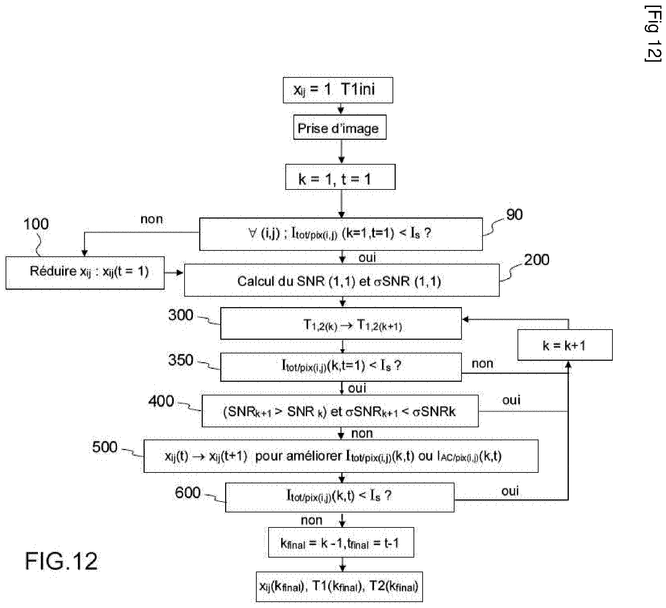

La figure 12 illustre un exemple d'algorithme d'optimisation intégrant à la fois le mode de réalisation incluant la modulation additionnelle de T2 et le mode de réalisation prenant en compte la réduction de la dispersion. Pour l'optimisation un poids est attribué à chacune des deux conditions augmentation du SNR et réduction du σSNR.

A titre illustratif il est présenté ci-dessous un exemple d'optimisation sur 2 pixels d'un imageur ayant un niveau de saturation par pixel (full well) de $10^4$ électrons.

Le premier pixel P1 vise optiquement dans une scène une distance z1 = 50cm avec une réflectivité de R(P1)=0.5.

Le deuxième pixel P2 vise dans la même scène une distance z2 = 100 cm avec une réflectivité R(P2)=0.2.

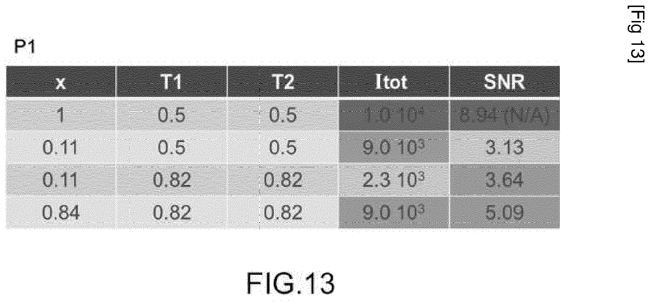

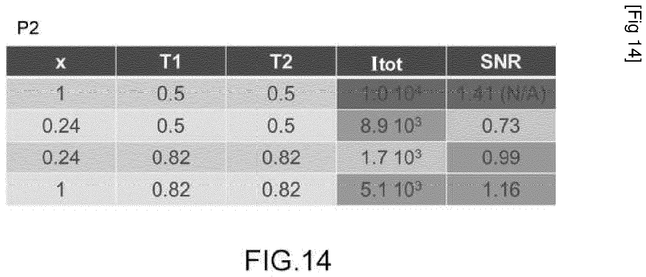

Les figures 13 et 14 présentent les résultats d'optimisation des valeurs de T1, T2 et x respectivement pour le pixel 1 P1 et le pixel 2 P2, sous forme de tableaux, en suivant la procédure d'optimisation du SNR sous contrainte de non saturation des pixels, en disposant de T1 et T2 variable et en considérant T1=T2, et en cherchant également à maximiser l'intensité pixel.

Les valeurs de T1 et T2 sont toujours communes aux 2 pixels (voir ci-dessus). On initialise avec les paramètres dans l'état T1=T2 =0.5 et x=1 pour les 2 pixels (pas de modulation d'intensité sur le faisceau Lref/pix pixélisé).

La valeur de l'intensité totale est donnée en nombre d'électrons.

Sur la première ligne des 2 tableaux on voit que le signal (Itot/pix) est saturé vu que l'on détecte une valeur égale à la valeur de saturation $10^4$ électrons. Ceci ne permet pas de récupérer une donnée de distance viable pour les 2 pixels. La première étape consiste à modifier x (diminuer sa valeur) de manière à baisser l'intensité du faisceau Lref/pix pour chaque pixel pour les sortir de la saturation.

La deuxième ligne dans chaque tableau montre que pour chaque pixel la valeur de x est différente (x=0.11 pour P1 et x=0.24 pour P2) pour atteindre une valeur de signal $I_{tot}$ non saturé et du même ordre.

A partir de ce moment on peut déterminer un SNR pour chaque pixel. Les valeurs de T1 et T2 étant symétriques dans les équations décrivant le signal, leur effet sera le même sur l'évolution du signal et du SNR : il est choisi de poser T1 = T2 et donc de les faire varier de la même manière.

La 3ème ligne sur chacun des 2 tableaux montre que pour T1=T2=0.82 le SNR a été amélioré pour chacun des 2 pixels. Néanmoins il a été perdu en valeur de signal, ce qui est souvent le cas lorsque le seul critère de mérite est le SNR.

Selon un mode de réalisation précité, on réalise un 2ème ajustement de la valeur de x pour chaque pixel (ligne 4 sur les 2 tableaux). On montre que l'on arrive à redresser la valeur du signal vers le haut tout en gagnant aussi sur la valeur du SNR. On se rend même compte qu'on est revenu à x=1 (valeur max) pour le pixel 2. Néanmoins il n'est à ce stade pas possible de modifier les valeurs de T1 et T2 car on risquerait de saturer le pixel1, qui est à une valeur assez proche de la saturation. Ainsi T1 etT2 sont à optimiser pour un rendu global du SNR et du signal (intensité) dans les limites de la non-saturation, sur tout le détecteur. En ce qui concerne les valeurs $x_{ij}$ elles sont principalement là pour une action locale sur chaque pixel afin d'éviter d'avoir des signaux saturés.

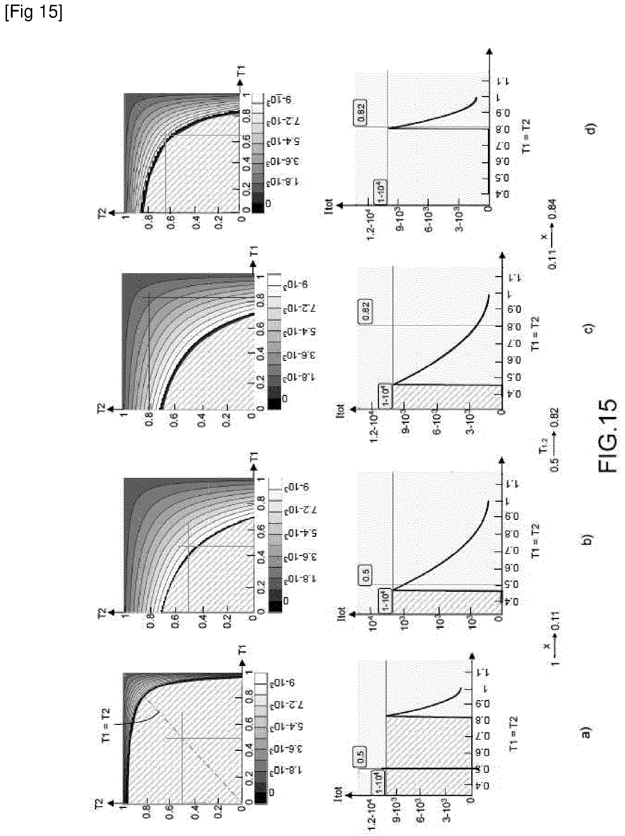

La figure 15 illustre l'évolution du signal pour le pixel 1 P1 en fonction de T1 et T2, pour différentes étapes de l'optimisation. La partie supérieure de la figure pour a) à d) montre le tracé 2D (ou « mapping ») du signal $I_{tot/pix}$ en fonction de T1 et T2 et pour une valeur de x(P1) fixe. La partie inférieure illustre la coupe selon la diagonale T1=T2. Les différentes valeurs de signal en nombre d'électrons sont indiquées par des niveaux de gris, la couleur blanche correspondant au niveau le plus élevé, juste avant la saturation. Pour plus de lisibilité, de manière délimiter la zone fonctionnelle de la zone non fonctionnelle sur chaque courbe, la zone saturation est signalée par des hachures et une valeur de zéro est affectée au signal saturé.

On constate que les courbes sont symétriques autour de l'axe T1=T2, validant le choix de travailler sur cet axe pour l'exemple d'optimisation cité ci-dessus. Une coupe dans la diagonale T1=T2 est aussi tracée (partie inférieure de la figure 15) afin de montrer la valeur du signal Itot autour de cet axe préférentiel.

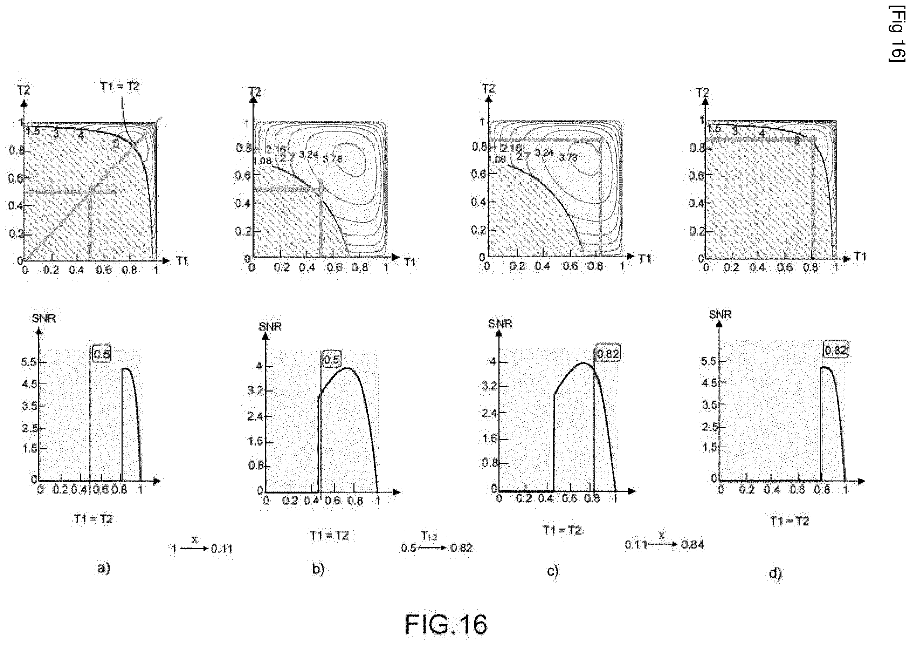

La figure 16 illustre l'évolution du SNR pour le pixel 1 P1 en fonction de T1 et T2 pour les mêmes étapes de l'optimisation que sur la figure 15. La partiesupérieure de la figure 16 de a) à d) illustre le tracé 2D du SNR pour le pixel 1 P1 en fonction de T1 et T2 et pour une valeur de x(P1). Les différentes valeurs de $I_{tot}$ en nombre d'électrons sont indiquées par des courbes de niveau. On constate que les courbes sont également symétriques autour de l'axe T1=T2. Une coupe dans la diagonale T1=T2 est aussi tracée dans la partie inférieure de la figure 16 afin de montrer la valeur du SNR autour de cet axe préférentiel. Pour plus de lisibilité la zone saturation est signalée par des hachures et une valeur de zéro est affectée au signal saturé.

Au début en a) (15 a) et 16 a) ) pour xini=1 le point de fonctionnement pour T1=T2=0.5 se situe dans la zone où le signal est saturé (zone hachurée).

Une fois la valeur de x modifiée de 1 vers 0.11 en b), on observe que le point de fonctionnement du signal est hors zone de saturation et se situe maintenant dans la zone où on peut calculer un SNR, ici de 2.8 (voir figure 16 b)). On est ici à la limite de la saturation mais il y a de la marge pour améliorer le SNR (les valeurs isoSNR les plus hautes se situant sur l'axe préférentiel en augmentant T1 et T2).

En faisant varier T1=T2 de 0.5 à la valeur de 0.82 (voir courbes 15 c) et 16 c)) on fait glisser la valeur du SNR vers une plus haute valeur, ici 3.6. En faisant varier T1=T2 de la sorte le point de fonctionnement du signal a aussi glissé vers des valeurs plus faibles au sein de la zone fonctionnelle (courbe 1D 15c)).

Afin de remédier à cela on change la plage de non fonctionnalité afin de la rapprocher au plus près du point de fonctionnement T1=T2=0.82 sans pourtant saturer le signal en jouant sur la valeur de x qui passe de 0.11 à 0.84. Cela permet d'augmenter le signal (voir figure 15 d)) et on voit aussi que la valeur du SNR a également un peu augmenté à 5 (figure 16 d)). En final le point de fonctionnement de ce pixel se situe à la limite de la saturation (haute valeur de signal) avec un SNR d'environ 5 optimisé au mieux.

Ainsi pour l'optimisation tout d'abord on diminue les xij pour les pixels saturés de manière à les faire sortir de la saturation (étape 100 sur la figure 11). Puis on augmente la valeur de T1=T2 de manière à faire monter le SNR (étapes 200 + 300 + 350 + 400). Enfin on réajuste les valeurs xij pour regagner au maximum de l'intensité en maintenant, voir augmentant, le SNR (étapes 500 + 600).

Selon un mode de réalisation du lidar 30 selon l'invention en espace libre le composant matriciel est un modulateur à cristal liquide LC-SLM en mode transmissif connus de l'homme de l'art. Préférentiellement chaque pixel est contrôlé avec une circuiterie souvent faite à base de TFT (Thin Film Transistors). Avec ce composant matriciel on pixélise le faisceau de référence et on contrôle l'intensité passant par chaque pixel. Bien entendu ce composant doit aussi être imagé optiquement sur le plan du détecteur afin que chaque pixel du SLM corresponde à un pixel P(i,j) du détecteur.

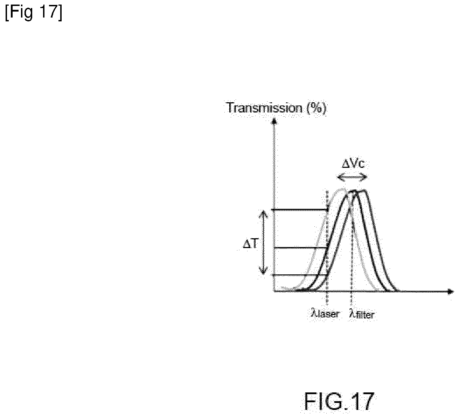

Selon un mode de réalisation du lidar selon l'invention le séparateur DS, et le cas échéant de combineur DR, est un filtre Fabry-Perot modulable électriquement. Le principe d'un filtre Fabry-Perot est de laisser passer un faisceau lumineux centré autour d'une longueur d'onde donnée $\lambda_{filter}$ avec une certaine largeur à mi-hauteur $\Delta\lambda_{filter}$. Sont connus de l'homme de l'art des filtres Fabry-Perot modulables où une tension vient moduler l'épaisseur de la cavité entre les réflecteurs de Bragg afin de décaler le centre de la plage de longueurs d'onde transmises. On utilise un filtre modulable qui permet de positionner la longueur de travail $\lambda_{laser}$ non pas au centre de la courbe de transmission du filtre mais sur un flanc de la courbe de sa réponse spectrale. En modulant par une tension le filtre cela permet de positionner plus au moins haut sur le flanc la valeur de transmission du filtre pour la longueur d'onde de travail $\lambda_{laser}$. Néanmoins une des contraintes à respecter est d'avoir une modulation de la longueur d'onde du laser très inférieure à $\Delta\lambda_{filter}$ afin de toujours rester situé sur le flanc de la réponse spectrale du filtre, comme illustré figure 17. Les trois courbes de transmission 17, 18 et 19 sont décalées en appliquant une tension, l'excursion en tension $\Delta Vc$ permettant de faire varier la transmission T du filtre (et donc sa réflexion) à la longueur d'onde $\lambda_{laser}$ selon une excursion $\Delta T$.

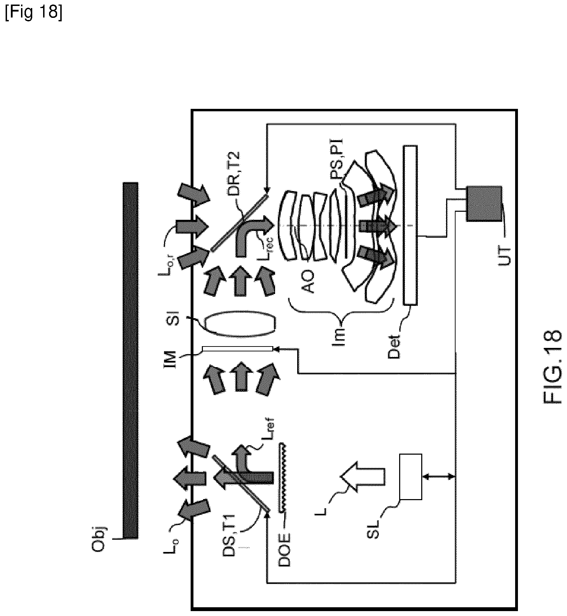

La figure 18 illustre un mode de réalisation du lidar 30 selon l'invention en espace libre dans lequel le deuxième dispositif optique D2 comprend en outre un système optique intermédiaire SI adapté pour former l'image intermédiaire et agencé après le séparateur DS et le composant matriciel SLM et avant le combineur DR. Le système optique intermédiaire SI en combinaison avec le système optique d'imagerie Im est agencé pour former une image du composant matriciel SLM sur le dispositif de détection Det.

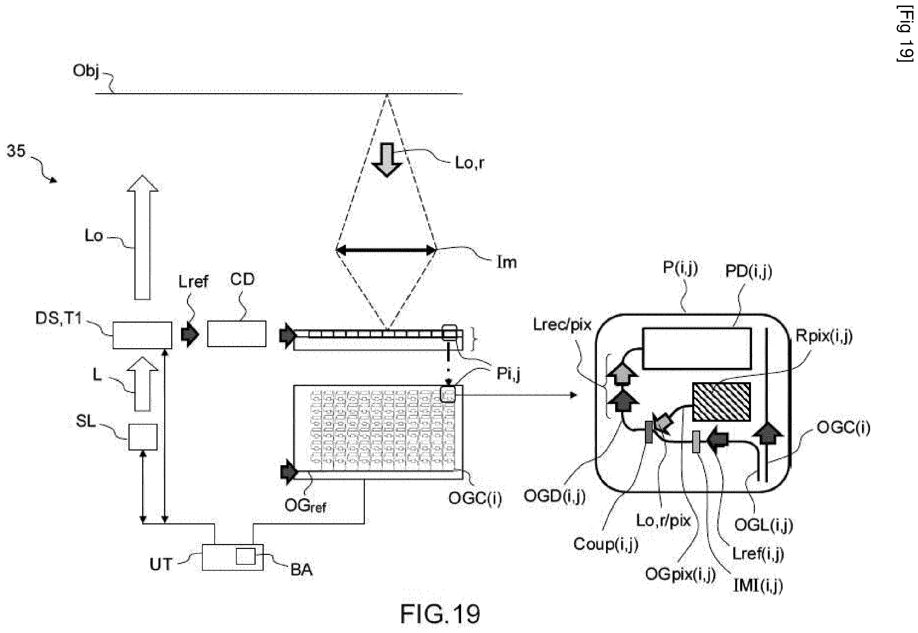

La figure 19 illustre un lidar 35 selon l'invention présentant une architecture intégrée.

Le faisceau de référence est ici injecté directement dans chaque pixel au niveau du détecteur, comme illustré figures 5 et 6. Les pixels du détecteurs sont répartis sur N colonnes et M lignes et au moins une partie du deuxième dispositif optique D2 acheminant le faisceau de référence jusqu'aux photo-détecteurs PDij est intégrée sur le détecteur Det conçu en photonique intégrée.

Le dispositif D2 comprend un guide optique dit guide référence OGref configuré pour recevoir le faisceau de référence et N guides optiques OGC(i), dits guides colonnes, couplés au guide référence (par exemple par couplage évanescent) , et adaptés pour acheminer une partie du faisceau de référence dans les N colonnes du détecteur. Chaque guide colonne est couplé à M guides optiques OGL(i,j) (par exemple par couplage évanescent), dits guides ligne, respectivement associés aux M pixels des M lignes du détecteur de la colonne. Les M guides lignes sont configurés pour acheminer une partie du faisceau de référence dans chaque pixel de la colonne.

Dans chaque pixel du détecteur, le dispositif D2 comprend un guide optique de détection OGD(i,j) couplé au composant photodétecteur PD(i,j)), un réseau de diffraction, dit réseau pixel Rpix(i,j), configuré pour coupler le faisceau image pixel vers le composant photo-détecteur, typiquement une photodiode guidée. Le réseau de diffraction récupère la lumière provenant de la scène et la couple dans un guide d'onde OGpix(i,j). Le dispositf D2 comprend également un coupleur, dit coupleur pixel Coup(i,j), configuré pour coupler, dans le guide de détection OGD(i,j), le faisceau image pixel Lo,r/pix et le faisceau référence pixel Lref/pix, formant ainsi le faisceau recombiné Lrec/pix permettant le mélange hétérodyne des deux faisceaux.

Le deuxième dispositif D2 comprend également un modulateur d'intensité intégré par pixel IMI(i,j) mis en série avec le guide ligne et disposé avant le coupleur pixel Coup(i,j), et dont au moins une des branches est modulable. Le modulateur IMI(i,j) est l'équivalent du SLM pixélisé en optique espace libre. La modulation d'intensité de chaque faisceau Lref/pix est ici réalisée en local, dans chaque pixel. Dans l'architecture de la figure 19 le séparateur DS est du même type que celui du lidar 30.

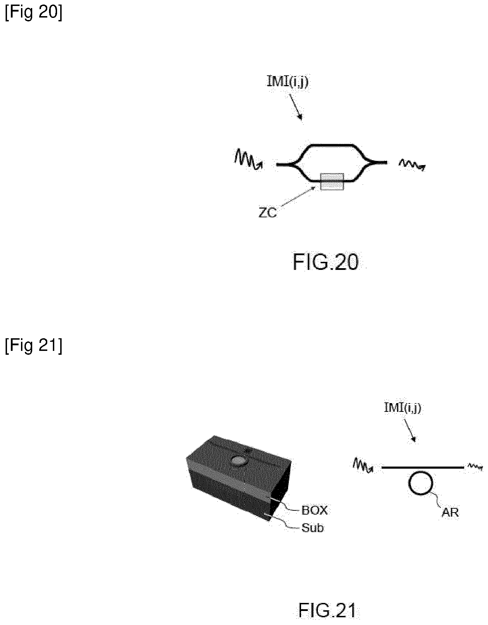

Selon un mode de réalisation le modulateur d'intensité IMI(i,j) est un interféromètre intégré de type Mach-Zender illustré figure 20 avec une de ses branches présentant une zone de couplage ZC modulée thermiquement ou par injection de porteurs ou par modulation électro-optique. L'activation de la modulation thermique ou électrique (faite par exemple par une diode PIN) est asservie par le signal reçu par la photodiode.

Selon une autre mode de réalisation le modulateur d'intensité intégré IMI(i,j) est un anneau résonnant AR tel qu'illustré figure 21, par exemple réalisé sur une couche bas indice (exemple : BOX pour « Buried Oxide » en anglais) déposée sur un substrat haut indice SUB (exemple :silicium), comme les autres éléments guidés (notamment les guides d'onde) cités dans les paragraphes précédents. Une partie de la lumière qui se propage dans le guide d'onde se couple dans l'anneau AR (par couplage évanescent, l'anneau étant situé relativement près du guide). L'anneau est résonnant à la longueur d'onde de travail c.a.d. que le déphasage de la lumière après avoir effectué un tour complet de l'anneau est un multiple de $2\pi$, de sorte que les interférences sont constructives en sortie du guide d'onde droit entre la lumière qui n'a pas été couplée dans l'anneau et celle qui a été couplée dedans, fait un ou plusieurs tours, et s'est découplée dans le guide. Donc l'intensité de sortie est égale à l'l'intensité d'entrée. Quand on applique une tension sur la zone de couplage (située sous l'anneau résonnant), le déphasage pour un tour de l'anneau varie et l'intensité de sortie décroît, donc on a bien un modulateur d'intensité.

Selon un mode de réalisation du lidar 35, équivalent au mode de réalisation du lidar 30 comprenant une modulation du combineur DR (typiquement une lame séparatrice) par une transmittance variable T2, on effectue la modulation par le coupleur pixel Coup(i,j) qui est un coupleur directionnel modulable, permettant de faire varier un ratio R entre le faisceau référence pixel et faisceau image pixel dans le faisceau Lrec. L'unité de traitement UT est alors configurée pour appliquer une valeur de ratio via ladite boucle d'asservissement et selon le critère d'optimisation. On effectue ici une modulation locale T2(i,j) et non plus une modulation globale comme en espace libre.

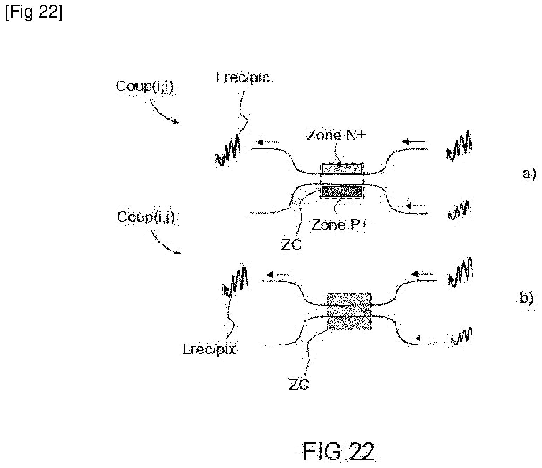

Dans un mode de réalisation de illustré figure 22 ce coupleur directionnel 2x2 Coup(i,j) présente sur une des branches une zone de couplage ZC modulée thermiquement (partie inférieure de la figure) ou par injection de porteurs (partie supérieure) ou par modulation électro-optique. Cela permet de faire varier le couplage entre les 2 bras et répartir le signal hétérodyne entre les 2 sorties de ce coupleur. Une des sorties est utilisée pour amener le signal vers la photodiode PD, l'autre est non utilisée, comme en espace libre où une voie de la lame séparatrice n'est pas utilisée.

Selon un autre mode les deux voies de sortie sont couplées par une jonction Y afin que tout le signal hétérodyne puisse être guidé vers le photo récepteur.

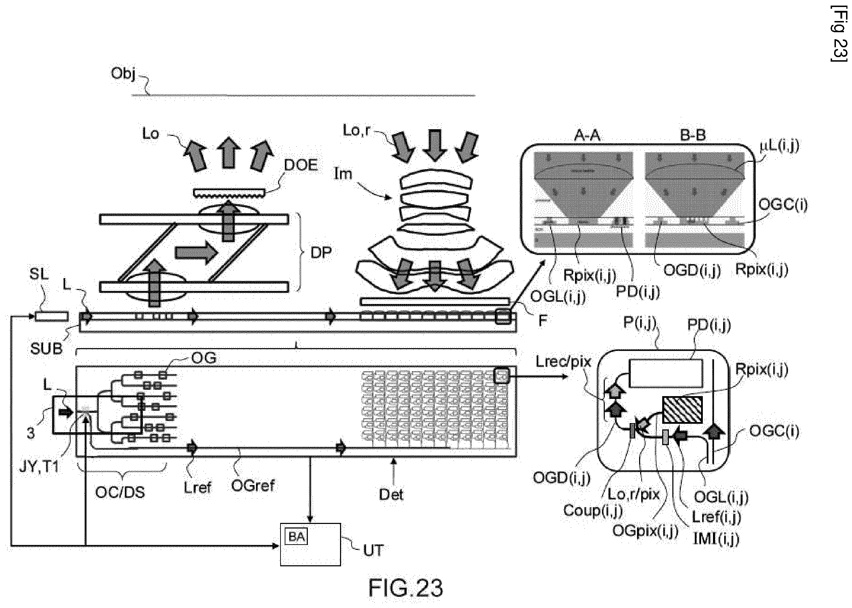

Selon un mode de réalisation du lidar 35 intégré selon l'invention illustré figure 23 le séparateur DS, le deuxième dispositif optique D2 et le détecteur sont réalisés sur un même substrat Sub. Le séparateur DS comprend un circuit optique intégré OC se subdivisant, via un coupleur directionnel modulable JY, en d'une part au moins un guide d'onde comprenant au moins un réseau de diffraction, dit réseau objet OG, configuré pour découpler une partie du faisceau laser du plan du circuit optique intégré de manière à former le faisceau objet L (via un dispositif de projection DP le cas échéant), et en d'autre part un guide d'onde OGref dépourvu de réseau guidant le faisceau de référence jusqu'au détecteur. Selon une option connue de l'homme de l'art illustré également figure 23 le détecteur comprend une matrice de microlentilles $\mu L(i,j)$ pour focaliser le faisceau objet dans les pixels Pij du détecteur.

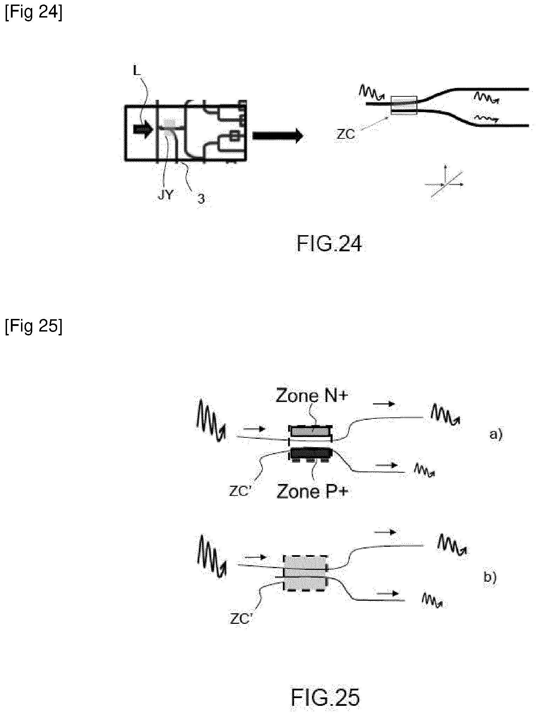

Selon un mode de réalisation le coupleur directionnel modulable JY est un coupleur à onde évanescente. Ce type de coupleur est illustré figure 24 qui présente un zoom de la zone 3 de la figure 23. Le figure 25 illustre deux variantes de coupleur directionnel. La figure 25 b) illustre une zone de couplage ZC' modulée par voie thermique et la figure 25 a) par injection de porteurs (une diode PIN par exemple). La modulation peut également être électro-optique. La modulation permet de faire varier le ratio du faisceau L allant vers le réseau de diffraction (renvoyant la lumière vers la scène) et le faisceau référence se dirigeant vers le détecteur. La figure ci-dessous montre le principe de coupleur par onde évanescente. A noter que dans les exemples des figures 22 et 25 les coupleurs Coup(i,j) et JY sont un même composant, utilisé soit pour séparer soit pour combiner.

Selon un autre aspect l'invention concerne une méthode de détection et de traitement d'un signal issu d'un système d'imagerie lidar cohérent, comprenant les étapes consistant à :

A générer un signal détecté pixel Spix à partir du faisceau recombiné pixel, le signal détecté pixel présentant une intensité dénommée intensité totale pixel Itot/pix,

B appliquer au faisceau de référence une valeur de première transmittance T1,

C appliquer, à chaque faisceau de référence pixel, une valeur de transmittance pixel xij, les valeurs étant déterminées via une boucle d'asservissement et selon un critère d'optimisation, le critère d'optimisation comprenant, pour chaque pixel, l'obtention d'une intensité totale pixel inférieure à une intensité seuil Is et d'un rapport signal sur bruit SNR amélioré,

D déterminer, pour chaque pixel, une fréquence F(i,j) de battement du faisceau recombiné.

Selon un mode de réalisation la méthode selon l'invention comprend en outre une étape C' consistant à appliquer une valeur de ratio entre le faisceau référence pixel et faisceau image pixel, la valeur de ratio étant déterminée par la boucle d'asservissement.

## Revendications

1. Système d'imagerie lidar cohérent (30, 35) comprenant :

- une source laser (SL) configurée pour émettre un rayonnement laser (L) avec une fréquence optique ($F_L$) modulée temporellement,
- un dispositif de détection (Det) comprenant une matrice de pixels (P), un pixel (Pij) comprenant un composant photo-détecteur (PD(i,j)),
- un premier dispositif optique, dénommé séparateur (DS), adapté pour séparer spatialement le rayonnement laser (L) en un faisceau dit faisceau de référence ($L_{ref}$) et en un faisceau dit faisceau objet ($L_o$) dirigé vers une scène à observer (Obj),
- un système optique d'imagerie (Im) présentant un axe optique (AO) et réalisant une image de la scène en imageant un faisceau objet réfléchi par la scène (Lo,r) sur les pixels du dispositif de détection, une fraction du faisceau objet réfléchi par ladite scène et illuminant un pixel étant dénommée faisceau image pixel (Lo,r/pix),
- un deuxième dispositif optique (D2) adapté pour acheminer une fraction du faisceau de référence, dénommée faiseau référence pixel (Lref/pix), vers chaque photodétecteur,

le deuxième dispostif optique (D2) et le système optique d'imagerie (Im) étant en outre configuré pour superposer, au niveau du composant photodétecteur d'un pixel et selon une direction de propagation sensiblement identique, le faisceau référence pixel (Lref/pix) et le faisceau image pixel (Lo,r/pix), formant un faisceau recombiné pixel (Lrec/pix),
le composant photo-détecteur d'un pixel étant configuré pour générer un signal détecté pixel (Spix) à partir du faisceau recombiné pixel, le signal détecté pixel présentant une intensité dénommée intensité totale pixel (Itot/pix), l'intensité totale pixel comprenant une intensité modulée ($I_{AC/pix}$) et une intensité constante ($I_{DC/pix}$),

le séparateur présentant une première transmittance variable (T1) identique pour tous les pixels et modulable,
le deuxième dispositif optique comprenant en outre au moins un modulateur d'intensité (IM, IMlij) adapté pour moduler une intensité de chaque faisceau référence pixel en appliquant une transmittance pixel (xij) modulable,

- le système d'imagerie lidar cohérent comprenant en outre une unité de traitement (UT) configurée pour appliquer une valeur de première transmittance (T1) et, pour chaque pixel, une valeur de transmittance pixel (xij), lesdites valeurs étant déterminées via une boucle d'asservissement et selon un critère d'optimisation, le critère d'optimisation comprenant l'obtention pour chaque pixel d'une intensité totale pixel inférieure à une intensité seuil (Is), et l'obtention d'un rapport signal sur bruit (SNR) amélioré,
le système d'imagerie lidar cohérent étant en outre configuré pour déterminer, pour chaque pixel, une fréquence (F(i,j)) d'un battement du faisceau recombiné.

2. Système selon la revendication précédente dans lequel un ratio signal sur bruit pour un pixel ($SNR_{pix}$) correspond au ratio de l'intensité modulée intégrée sur un temps donné (Tint) sur une racine carrée de l'intensité totale intégrée sur le même temps, le rapport signal sur bruit (SNR) étant déterminé à partir des ratio signal sur bruit des pixels (($SNR_{pix}$).

3. Système selon la revendication 2 dans lequel le critère d'optimisation comprend en outre l'obtention d'une dispersion ($\sigma SNR$) des valeurs de ratio signal sur bruit pixel ($SNR_{pix}$) réduite.

4. Système selon l'une des revendications précédentes dans lequel le critère d'optimisation comprend en outre l'obtention, pour chaque pixel, d'une intensité totale ou d'une intensité modulée également améliorée.

5. Système selon l'une des revendications précédentes dans lequel le faisceau référence se propage en espace libre, le deuxième dispositif optique (D2) comprenant un dispositif optique de recombinaison, dénommé combineur (DR), configuré pour superposer le faisceau de référence et le faisceau image réfléchi par la scène,

le séparateur et le deuxième dispositif optique étant configurés pour former une image intermédiaire (PS) virtuelle ou réelle du faisceau de référence dans un plan perpendiculaire audit axe optique, dit plan image intermédiaire (PI), ledit plan intermédiaire étant disposé de manière à générer des franges en teinte plate obtenues par interférence, sur chaque pixel éclairé, entre le faisceau référence pixel et le faisceau image pixel, le modulateur d'intensité étant un composant matriciel (SLM) pilotable électriquement positionné sur le trajet optique du faisceau de référence en aval du séparateur et en amont du deuxième disposif optique.

6. Système selon la revendication précédente dans lequel le deuxième dispositif optique comprend en outre un système optique intermédiaire (SI) adapté pour former ladite image intermédiaire et agencé après le séparateur (DS) et le composant matriciel (SLM) et avant le combineur (DR),
le système optique intermédiaire (SI) en combinaison avec le système optique d'imagerie (Im) étant en outre agencé pour former une image du composant matriciel (SLM) sur le dispositif de détection (Det).

7. Système selon l'une des revendications 5 ou 6 dans lequel le séparateur est un filtre Fabry-Perot modulable électriquement.

8. Système selon l'une des revendications 5 à 7 dans lequel le composant matriciel est un modulateur à cristal liquide (LC-SLM).

9. Système selon l'une des revendications 5 à 8 dans lequel le combineur (DR) présente une deuxième transmittance modulable identique pour tous les pixels, l'unité de traitement étant en outre configurée pour appliquer une valeur de deuxième transmittance (T2) via ladite boucle d'asservissement et selon ledit critère d'optimisation.

10. Système selon l'une des revendications 1 à 4 dans lequel les pixels du dispositif de détection sont répartis sur N colonnes et M lignes et dans lequel au moins une partie du deuxième dispositif optique (D2) est intégré sur le dispositif détection et comprend :

- un guide optique dit guide référence (OGref) configuré pour recevoir le faisceau de référence,
- N guides optiques (OGC(i)), dits guides colonnes couplés au guide référence, et adaptés pour acheminer une partie du faisceau de référence dans les N colonnes du dispositif de détection,
- chaque guide colonne étant couplé à M guides optiques (OGL(i,j)), dits guides ligne, respectivement associés aux M pixels des M lignes du dispositif de détection de ladite colonne, les M guides lignes étant configurés pour acheminer une partie du faisceau de référence dans chaque pixel de la colonne,
- et, dans chaque pixel (Pij) du dispositif de détection:

- un guide optique de détection (OGD(i,j)) couplé au composant photodétecteur (PD(i,j)),
- un réseau de diffraction, dit réseau pixel (Rpix(i,j)), configuré pour coupler le faisceau image pixel vers le composant photo-détecteur,
- un coupleur, dit coupleur pixel (Coup(i,j)), configuré pour coupler, dans le guide de détection, le faisceau image pixel et le faisceau référence pixel, formant ainsi le faisceau recombiné,

- le deuxième dispositif optique comprenant un modulateur d'intensité intégré par pixel (IMI(i,j)) mis en série avec le guide ligne et disposé avant le coupleur pixel, et dont au moins une des branches est modulable.

**11.** Système selon la revendication précédente dans lequel ledit modulateur d'intensité intégré est un anneau résonnant.

**12.** Système selon l'une des revendications 10 ou 11 dans lequel le séparateur (DS), le deuxième dispositif optique (D2) et le dispositif de détection sont réalisés sur un même substrat (Sub), le séparateur comprenant un circuit optique intégré (OC) se subdivisant, via une jonction Y modulable (JY), en d'une part au moins un guide d'onde comprenant au moins un réseau de diffraction, dit réseau objet (OG), l'au moins un réseau objet étant configuré pour découpler une partie du faisceau laser du plan du circuit optique intégré de manière à former le faisceau objet, et en d'autre part un guide d'onde dépourvu de réseau guidant le faisceau de référence jusqu'au dispositif de détection.

**13.** Système selon l'une des revendications 10 à 12 dans lequel le coupleur pixel est un coupleur directionnel modulable, de manière à faire varier un ratio (R) entre le faisceau référence pixel et faisceau image pixel, l'unité de traitement étant en outre configurée pour appliquer une valeur de ratio via ladite boucle d'asservissement et selon ledit critère d'optimisation.

**14.** Méthode de détection et de traitement d'un signal issu d'un système d'imagerie lidar cohérent,

le système d'imagerie lidar cohérent comprenant :

- une source laser (SL) configurée pour un rayonnement laser (L) avec une fréquence optique ($F_L$) modulée temporellement,
- un dispositif de détection (Det) comprenant une matrice de pixels (P), un pixel (Pij) comprenant un composant photo-détecteur (PDij),
- un premier dispositif optique, dénommé séparateur, adapté pour séparer spatialement le rayonnement laser (L) en un faisceau dit faisceau de référence ($L_{ref}$) et en un faisceau dit faisceau objet ($L_o$) dirigé vers la scène à observer (Obj),
- un système optique d'imagerie (Im) présentant un axe optique (AO) et réalisant une image de la scène en imageant un faisceau objet réfléchi par la scène (Lo,r) sur les pixels du dispositif de détection, une fraction du faisceau objet réfléchi par ladite scène et illuminant un pixel étant dénommée faisceau image pixel (Lo,r/pix),
- un deuxième dispositif optique (D2) adapté pour acheminer une fraction du faisceau de référence, dénommée faiseau référence pixel (Lref/pix), vers chaque photodétecteur,

le deuxième dispostif optique (D2) et le système optique d'imagerie (Im) étant en outre configuré pour superposer, au niveau du composant photodétecteur d'un pixel et selon une direction de propagation sensiblement identique, le faisceau référence pixel (Lref/pix) et le faisceau image pixel (Lo,r/pix), formant un faisceau recombiné pixel (Lrec/pix),
le séparateur présentant une première transmittance variable (T1) identique pour tous les pixels et modulable,
le deuxième dispositif optique comprenant en outre au moins un modulateur d'intensité (IM, IMlij) adapté pour moduler une intensité de chaque faisceau référence pixel en appliquant une transmittance pixel (xij) modulable, la méthode comprenant les étapes consistant à :

**A** générer un signal détecté pixel (Spix) à partir du faisceau recombiné pixel, le signal détecté pixel présentant une intensité dénommée intensité totale pixel (Itot/pix),

**B** appliquer, à chaque faisceau de référence pixel, une valeur de transmittance pixel (xij)

**C** appliquer au faisceau de référence une valeur de première transmittance (T1), lesdites valeurs étant déterminées via une boucle d'asservissement et selon un critère d'optimisation, le critère d'optimisation comprenant, pour chaque pixel l'obtention d'une intensité totale pixel inférieure à une intensité seuil (Is) et l'obtention d'un rapport signal sur bruit (SNR) amélioré,

**D** déterminer, pour chaque pixel, une fréquence (F(i,j)) d'un battement du faisceau recombiné.

**15.** Méthode selon la revendication précédente comprenant en outre une étape **C'** consistant à appliquer une valeur de ratio entre le faisceau référence pixel et faisceau image pixel, ladite valeur de ratio étant déterminée par la dite boucle d'asservissement.

**Patentansprüche**

**1.** Kohärentes Lidar-Abbildungssystem (30, 35), umfassend:

- eine Laserquelle (SL), die dafür konfiguriert ist, Laserstrahlung (L) mit einer zeitlich modulierten optischen Frequenz ($F_L$) zu emittieren,
- eine Ermittlungsvorrichtung (Det), die eine Matrixanordnung von Pixeln (P) umfasst, wobei ein Pixel (Pij) eine Fotodetektorkomponente (PD(i,j)) umfasst,
- eine erste optische Vorrichtung, als Strahlteiler (DS) bezeichnet, die dazu bestimmt ist, die Laserstrahlung (L) räumlich in einen als Referenzstrahl ($L_{ref}$) bezeichneten Strahl und in einen als Objektstrahl ($L_o$) bezeichneten Strahl, der auf eine zu beobachtende Szene (Obj) gerichtet ist, zu teilen,
- ein optisches Abbildungssystem (Im), das eine optische Achse (AO) aufweist und ein Bild der Szene erzeugt, indem es einen durch die Szene reflektierten Objektstrahl (Lo,r) auf die Pixel der Ermittlungsvorrichtung abbildet, wobei ein Anteil des Objektstrahls, der durch die Szene reflektiert wird und ein Pixel beleuchtet, als Pixel-Bildstrahl (Lo,r/pix) bezeichnet wird,
- eine zweite optische Vorrichtung (D2), die dazu bestimmt ist, einen Anteil des Referenzstrahls, der als Pixel-Referenzstrahl (Lref/pix) bezeichnet wird, zu jedem Fotodetektor zu leiten,

wobei die zweite optische Vorrichtung (D2) und das optische Abbildungssystem (Im) ferner dafür konfiguriert sind, an der Fotodetektorkomponente eines Pixels und in einer im Wesentlichen identischen Ausbreitungsrichtung den Pixel-Referenzstrahl (Lref/pix) und den Pixel-Bildstrahl (Lo,r/pix) zu überlagern, wodurch ein Pixel-Rekombinationsstrahl (Lrec/pix) gebildet wird,

wobei die Fotodetektorkomponente eines Pixels dafür konfiguriert ist, ein Pixel-Ermittlungssignal (Spix) aus dem Pixel-Rekombinationsstrahl zu erzeugen, wobei das Pixel-Ermittlungssignal eine Intensität aufweist, die als Pixel-Gesamtintensität (Itot/pix) bezeichnet wird, wobei die Pixel-Gesamtintensität eine modulierte Intensität ($I_{AC/pix}$) und eine konstante Intensität ($I_{DC/pix}$) umfasst,

wobei der Strahlteiler einen variablen ersten Transmissionsgrad (T1) aufweist, der für alle Pixel identisch und modulierbar ist,

wobei die zweite optische Vorrichtung ferner mindestens einen Intensitätsmodulator (IM, IMIij) umfasst, der dazu bestimmt ist, eine Intensität jedes Pixel-Referenzstrahls durch Anwenden eines modulierbaren Pixel-Transmissionsgrades (xij) zu modulieren,

- wobei das kohärente Lidar-Abbildungssystem ferner eine Verarbeitungseinheit (UT) umfasst, die dafür konfiguriert ist, einen ersten Transmissionsgrad (T1) und für jedes Pixel einen Pixel-Transmissionsgradwert (xij) anzuwenden, wobei diese Werte mittels eines Regelkreises und unter Verwendung eines Optimierungskriteriums bestimmt werden, wobei das Optimierungskriterium das Erlangen einer Pixel-Gesamtintensität für jedes Pixel, die kleiner als eine Schwellenintensität (Is) ist, und das Erlangen eines verbesserten Signal-Rausch-Verhältnisses (SNR) umfasst,

wobei das kohärente Lidar-Abbildungssystem ferner dafür konfiguriert ist, für jedes Pixel eine Schwebungsfrequenz (F(i,j)) des rekombinierten Strahls zu bestimmen.

**2.** System nach dem vorhergehenden Anspruch, wobei ein Signal-Rausch-Verhältnis für ein Pixel ($SNR_{pix}$) dem Verhältnis der über eine gegebene Zeit integrierten modulierten Intensität (Tint) zu einer Quadratwurzel der über dieselbe Zeit integrierten Gesamtintensität entspricht, wobei das Signal-Rausch-Verhältnis (SNR) aus den Signal-Rausch-Verhältnissen der Pixel ($SNR_{pix}$) bestimmt wird.

3. System nach Anspruch 2, wobei das Optimierungskriterium ferner das Erlangen einer verringerten Streuung ($\sigma$SNR) der Signal-Rausch-Verhältniswerte ($SNR_{pix}$) der Pixel umfasst.

4. System nach einem der vorhergehenden Ansprüche, wobei das Optimierungskriterium ferner das Erlangen, für jedes Pixel, einer Gesamtintensität oder einer modulierten Intensität, die ebenfalls verbessert ist, umfasst.

5. System nach einem der vorhergehenden Ansprüche, wobei der Referenzstrahl sich im freien Raum ausbreitet, wobei die zweite optische Vorrichtung (D2) eine als Kombinierer (DR) bezeichnete optische Rekombinationsvorrichtung umfasst, die dafür konfiguriert ist, den Referenzstrahl und den durch die Szene reflektierten Bildstrahl zu überlagern,

   wobei der Strahlteiler und die zweite optische Vorrichtung dafür konfiguriert sind, ein virtuelles oder reelles Zwischenbild (PS) des Referenzstrahls in einer als Zwischenbildebene (PI) bezeichneten Ebene senkrecht zu der optischen Achse auszubilden, wobei die Zwischenebene dafür angeordnet ist, durch Interferenz erlangte flache Farbsäume zwischen dem Pixel-Referenzstrahl und dem Pixel-Bildstrahl auf jedem beleuchteten Pixel zu erzeugen,
   wobei der Intensitätsmodulator eine elektrisch steuerbare Matrixkomponente (SLM) ist, der auf dem optischen Weg des Referenzstrahls positioniert ist, dem Strahlteiler nachgeschaltet und der zweiten optischen Vorrichtung vorgeschaltet.

6. System nach dem vorhergehenden Anspruch, wobei die zweite optische Vorrichtung ferner ein optisches Zwischensystem (SI) umfasst, das dazu bestimmt ist, das Zwischenbild auszubilden, und das nach dem Strahlteiler (DS) und der Matrixkomponente (SLM) und vor dem Kombinierer (DR) angeordnet ist,
   wobei das optische Zwischensystem (SI) in Kombination mit dem optischen Abbildungssystem (Im) ferner dafür angeordnet ist, ein Bild der Matrixkomponente (SLM) auf der Ermittlungsvorrichtung (Det) auszubilden.

7. System nach einem der Ansprüche 5 oder 6, wobei der Strahlteiler ein elektrisch modulierbares Fabry-Perot-Filter ist.

8. System nach einem der Ansprüche 5 bis 7, wobei die Matrixkomponente ein Flüssigkristallmodulator (LC-SLM) ist.

9. System nach einem der Ansprüche 5 bis 8, wobei der Kombinierer (DR) einen zweiten modulierbaren Transmissionsgrad aufweist, der für alle Pixel identisch ist, wobei die Verarbeitungseinheit ferner dafür konfiguriert ist, mittels des Regelkreises und unter Verwendung des Optimierungskriteriums einen zweiten Transmissionsgradwert (T2) anzuwenden.

10. System nach einem der Ansprüche 1 bis 4, wobei die Pixel der Ermittlungsvorrichtung auf N Spalten und M Zeilen verteilt sind und wobei mindestens ein Teil der zweiten optischen Vorrichtung (D2) in die Ermittlungsvorrichtung integriert ist und umfasst:

   - einen optischen Leiter, als Referenzleiter (OGref) bezeichnet, der dafür konfiguriert ist, den Referenzstrahl zu empfangen,
   - N optische Leiter (OGC(i)), als Spaltenleiter bezeichnet, die mit dem Referenzleiter gekoppelt und dazu bestimmt sind, einen Teil des Referenzstrahls in die N Spalten der Ermittlungsvorrichtung zu leiten,
   - wobei jeder Spaltenleiter mit M optischen Leitern (OGL(i,j)), als Zeilenleiter bezeichnet, gekoppelt ist, die jeweils den M Pixeln der M Zeilen der Ermittlungsvorrichtung der Spalte zugeordnet sind, wobei die M Zeilenleiter dafür konfiguriert sind, einen Teil des Referenzstrahls in jedes Pixel der Spalte zu leiten,
   - und in jedem Pixel (Pij) der Ermittlungsvorrichtung:
   - einen optischen Ermittlungsleiter (OGD(i,j)), der mit der Fotodetektorkomponente (PD(i,j)) gekoppelt ist,
   - ein Beugungsgitter, als Pixel-Gitter (Rpix(i,j)) bezeichnet, das dafür konfiguriert ist, den Pixel-Bildstrahl in die Fotodetektorkomponente zu koppeln,
   - einen Koppler, als Pixel-Koppler (Coup(i,j)) bezeichnet, der dafür konfiguriert ist, den Pixel-Bildstrahl und den Pixel-Referenzstrahl in den Ermittlungsleiter zu koppeln, wodurch er den rekombinierten Strahl ausbildet,
   - wobei die zweite optische Vorrichtung einen integrierten Intensitätsmodulator pro Pixel (IMI(i,j)) umfasst, der mit dem Zeilenleiter in Reihe platziert und vor dem Pixel-Koppler angeordnet ist und wobei mindestens einer der Zweige desselben modulierbar ist.

11. System nach dem vorhergehenden Anspruch, wobei der integrierte Intensitätsmodulator ein Resonanzring ist.

12. System nach einem der Ansprüche 10 oder 11, wobei der Strahlteiler (DS), die zweite optische Vorrichtung (D2) und die Ermittlungsvorrichtung auf demselben Substrat (Sub) erzeugt sind, wobei der Strahlteiler einen integrierten optischen Schaltkreis (OC) umfasst, der sich mittels einer modulierbaren Y-Kopplung (JY) unterteilt, in einerseits mindestens einen Wellenleiter, der mindestens ein Beugungsgitter umfasst, als Objektgitter (OG) bezeichnet, wobei das mindestens eine Objektgitter dafür konfiguriert ist, einen Teil des Laserstrahls aus der Ebene des integrierten optischen Schaltkreises auszukoppeln, um den Objektstrahl auszubilden, und andererseits einen Wellenleiter ohne Gitter, der den Referenzstrahl zur Ermittlungsvorrichtung leitet.

13. System nach einem der Ansprüche 10 bis 12, wobei der Pixel-Koppler ein modulierbarer Richtkoppler ist, um ein Verhältnis (R) zwischen dem Pixel-Referenzstrahl und dem Pixel-Bildstrahl zu variieren, wobei die Verarbeitungseinheit ferner dafür konfiguriert ist, mittels des Regelkreises und unter Verwendung des Optimierungskriteriums einen Verhältniswert anzuwenden.

14. Verfahren zur Ermittlung und Verarbeitung eines Signals das aus einem kohärenten Lidar-Abbildungssystem stammt,

wobei das kohärente Lidar-Abbildungssystem umfasst:

- eine Laserquelle (SL), die dafür konfiguriert ist, Laserstrahlung (L) mit einer zeitlich modulierten optischen Frequenz ($F_L$) zu emittieren,
- eine Ermittlungsvorrichtung (Det), die eine Matrixanordnung von Pixeln (P) umfasst, wobei ein Pixel (Pij) eine Fotodetektorkomponente (PD(i,j)) umfasst,
- eine erste optische Vorrichtung, als Strahlteiler bezeichnet, die dazu bestimmt ist, die Laserstrahlung (L) räumlich in einen als Referenzstrahl ($L_{ref}$) bezeichneten Strahl und in einen als Objektstrahl ($L_o$) bezeich- neten Strahl, der auf die zu beobachtende Szene (Obj) gerichtet ist, zu teilen,
- ein optisches Abbildungssystem (Im), das eine optische Achse (AO) aufweist und ein Bild der Szene erzeugt, indem es einen durch die Szene reflektierten Objektstrahl (Lo,r) auf die Pixel der Ermittlungsvorrichtung abbildet, wobei ein Anteil des Objektstrahls, der durch die Szene reflektiert wird und ein Pixel beleuchtet, als Pixel-Bildstrahl (Lo,r/pix) bezeichnet wird,
- eine zweite optische Vorrichtung (D2), die dazu bestimmt ist, einen Anteil des Referenzstrahls, der als Pixel-Referenzstrahl (Lref/pix) bezeichnet wird, zu jedem Fotodetektor zu leiten,

wobei die zweite optische Vorrichtung (D2) und das optische Abbildungssystem (Im) ferner dafür konfiguriert sind, an der Fotodetektorkomponente eines Pixels und in einer im Wesentlichen identischen Ausbreitungsrichtung den Pixel-Referenzstrahl (Lref/pix) und den Pixel-Bildstrahl (Lo,r/pix) zu überlagern, wodurch ein Pixel- Rekombinationsstrahl (Lrec/pix) gebildet wird,
wobei der Strahlteiler einen variablen ersten Transmissionsgrad (T1) aufweist, der für alle Pixel identisch und modulierbar ist,
wobei die zweite optische Vorrichtung ferner mindestens einen Intensitätsmodulator (IM, IMIij) umfasst, der dazu bestimmt ist, eine Intensität jedes Pixel-Referenzstrahls durch Anwenden eines modulierbaren Pixel- Transmissionsgrades (xij) zu modulieren,
wobei das Verfahren die folgenden Schritte umfasst:

A Erzeugen eines Pixel-Ermittlungssignals (Spix) aus dem Pixel-Rekombinationsstrahl, wobei das Pixel- Ermittlungssignal eine Intensität aufweist, die als Pixel-Gesamtintensität (Itot/pix) bezeichnet wird,
B Anwenden eines Pixel-Transmissionsgradwerts (xij) auf jeden Pixel-Referenzstrahl,
C Anwenden eines ersten Transmissionsgradwerts (T1) auf den Referenzstrahl,
wobei diese Werte mittels eines Regelkreises und unter Verwendung eines Optimierungskriteriums bestimmt werden, wobei das Optimierungskriterium das Erlangen einer Pixel-Gesamtintensität für jedes Pixel, die kleiner als eine Schwellenintensität (Is) ist, und das Erlangen eines verbesserten Signal-Rausch-Verhältnisses (SNR) umfasst,
D Bestimmen einer Schwebungsfrequenz (F(i,j)) des rekombinierten Strahls für jedes Pixel.

15. Verfahren nach dem vorhergehenden Anspruch, ferner umfassend einen Schritt C' des Anwendens eines Verhältniswerts zwischen dem Pixel-Referenzstrahl und dem Pixel-Bildstrahl, wobei der Verhältniswert durch den Regelkreis bestimmt wird.

**Claims**

1. A coherent Lidar imaging system (30, 35) comprising:

   - a laser source (SL) configured to emit laser radiation (L) with a temporally modulated optical frequency ($F_L$);
   - a detection device (Det) comprising a matrix of pixels (P), with a pixel (Pij) comprising a photodetector component (PD(i,j));
   - a first optical device, called splitter (DS), adapted to spatially split the laser radiation (L) into a beam, called reference beam ($L_{ref}$), and into a beam, called object beam ($L_o$), that is directed towards a scene to be observed (Obj);
   - an optical imaging system (Im) having an optical axis (AO) and producing an image of the scene by imaging an object beam reflected by the scene (Lo,r) onto the pixels of the detection device, with a fraction of the object beam reflected by said scene and illuminating a pixel being called image pixel beam (Lo,r/pix);
   - a second optical device (D2) adapted to route a fraction of the reference beam, called reference pixel beam (Lref/pix), to each photodetector;

      the second optical device (D2) and the optical imaging system (Im) being further configured to superimpose, on the photodetector component of a pixel and in a substantially identical propagation direction, the reference pixel beam (Lref/pix) and the image pixel beam (Lo,r/pix), forming a recombined pixel beam (Lrec/pix);
      with the photodetector component of a pixel being configured to generate a detected pixel signal (Spix) from the recombined pixel beam, the detected pixel signal having an intensity, called total pixel intensity (Itot/pix), with the total pixel intensity comprising a modulated intensity ($I_{AC/pix}$) and a constant intensity ($I_{DC/pix}$),
      the splitter having a first variable transmittance (T1) that is identical for all the pixels and is modulable,
      the second optical device further comprising at least one intensity modulator (IM, IMIij) adapted to modulate an intensity of each reference pixel beam by applying a modulable pixel transmittance (xij),

   - the coherent Lidar imaging system further comprising a processing unit (UT) configured to apply a first transmittance value (T1) and, for each pixel, a pixel transmittance value (xij), with said values being determined via a control loop and according to an optimisation criterion, with the optimisation criterion comprising obtaining, for each pixel, a total pixel intensity below a threshold intensity (Is), and obtaining an improved signal-to-noise ratio (SNR),
   the coherent Lidar imaging system further being configured to determine, for each pixel, a frequency (F(i,j)) of a beat of the recombined beam.

2. The system according to the preceding claim, wherein a signal-to-noise ratio for a pixel ($SNR_{pix}$) corresponds to the ratio of the modulated intensity integrated over a given time (Tint) to a square root of the total intensity integrated over the same time, with the signal-to-noise ratio (SNR) being determined from the signal-to-noise ratios of the pixels ($SNR_{pix}$).

3. The system according to claim 2, wherein the optimisation criterion further comprises obtaining a reduced dispersion ($\sigma SNR$) of the pixel signal-to-noise ratio values ($SNR_{pix}$).

4. The system according to any of the preceding claims, wherein the optimisation criterion further comprises obtaining, for each pixel, a total intensity or a modulated intensity that is also improved.

5. The system according to any of the preceding claims, wherein the reference beam propagates in free space, with the second optical device (D2) comprising an optical recombination device, called combiner (DR), configured to superimpose the reference beam and the image beam reflected by the scene,

   with the splitter and the second optical device being configured to form a virtual or real intermediate image (PS) of the reference beam in a plane perpendicular to said optical axis, called intermediate image plane (PI), with said intermediate plane being disposed to generate flat-tint fringes, obtained by interference, on each illuminated pixel, between the reference pixel beam and the image pixel beam,
   with the intensity modulator being an electrically controllable matrix component (SLM) positioned on the optical path of the reference beam downstream of the splitter and upstream of the second optical device.

6. The system according to the preceding claim, wherein the second optical device further comprises an intermediate optical system (SI) adapted to form said intermediate image and arranged after the splitter (DS) and the matrix component (SLM) and before the combiner (DR),
the intermediate optical system (SI) in combination with the optical imaging system (Im) further being arranged to form an image of the matrix component (SLM) on the detection device (Det).

7. The system according to any of claims 5 or 6, wherein the splitter is an electrically modulable Fabry-Perot filter.

8. The system according to any of claims 5 to 7, wherein the matrix component is a liquid-crystal modulator (LC-SLM).

9. The system according to any of claims 5 to 8, wherein the combiner (DR) has a second modulable transmittance that is identical for all the pixels, with the processing unit further being configured to apply a second transmittance value (T2) via said control loop and according to said optimisation criterion.

10. The system according to any of claims 1 to 4, wherein the pixels of the detection device are distributed over N columns and M rows, and wherein at least part of the second optical device (D2) is integrated on the detection device and comprises:

- an optical guide, called reference guide (OGref), configured to receive the reference beam;
- N optical guides (OGC(i)), called column guides, coupled to the reference guide, and adapted to route part of the reference beam into the N columns of the detection device;
- with each column guide being coupled to M optical guides (OGL(i,j)), called row guides, respectively associated with the M pixels of the M rows of the detection device of said column, with the M row guides being configured to route part of the reference beam into each pixel of the column;
- and in each pixel (Pij) of the detection device:
- an optical detection guide (OGD(i,j)) coupled to the photodetector component (PD(i,j));
- a diffraction grating, called pixel grating (Rpix(i,j)), configured to couple the image pixel beam to the photodetector component;
- a coupler, called pixel coupler (Coup(i,j)), configured to couple the image pixel beam and the reference pixel beam in the detection guide, thus forming the recombined beam;
- with the second optical device comprising one integrated intensity modulator per pixel (IMI(i,j)) placed in series with the row guide and disposed before the pixel coupler, and at least one of the branches of which is modulable.

11. The system according to the preceding claim, wherein said integrated intensity modulator is a resonant ring.

12. The system according to any of claims 10 or 11, wherein the splitter (DS), the second optical device (D2) and the detection device are produced on the same substrate (Sub), with the splitter comprising an integrated optical circuit (OC) subdividing, via a modulable Y-junction (JY), into, on the one hand, at least one waveguide comprising at least one diffraction grating, called object grating (OG), with the at least one object grating being configured to decouple part of the laser beam from the plane of the integrated optical circuit so as to form the object beam, and, on the other hand, a waveguide devoid of a grating guiding the reference beam to the detection device.

13. The system according to any of claims 10 to 12, wherein the pixel coupler is a modulable directional coupler, so as to vary a ratio (R) between the reference pixel beam and the image pixel beam, with the processing unit further being configured to apply a ratio value via said control loop and according to said optimisation criterion.

14. A method for detecting and processing a signal originating from a coherent Lidar imaging system,

the coherent Lidar imaging system comprising:

- a laser source (SL) configured to emit laser radiation (L) with a temporally modulated optical frequency ($F_L$);
- a detection device (Det) comprising a matrix of pixels (P), with a pixel (Pij) comprising a photodetector component (PD(i,j));
- a first optical device, called splitter, adapted to spatially split the laser radiation (L) into a beam, called reference beam ($L_{ref}$), and into a beam, called object beam ($L_o$), that is directed towards the scene to be observed (Obj);
- an optical imaging system (Im) having an optical axis (AO) and producing an image of the scene by imaging an object beam reflected by the scene (Lo,r) onto the pixels of the detection device, with a fraction of the object beam reflected by said scene and illuminating a pixel being called image pixel beam (Lo,r/pix);

- a second optical device (D2) adapted to route a fraction of the reference beam, called reference pixel beam (Lref/pix), to each photodetector;

with the second optical device (D2) and the optical imaging system (Im) being further configured to superimpose, on the photodetector component of a pixel and in a substantially identical propagation direction, the reference pixel beam (Lref/pix) and the image pixel beam (Lo,r/pix), forming a recombined pixel beam (Lrec/pix);
the splitter having a first variable transmittance (T1) that is identical for all the pixels and is modulable,
the second optical device further comprising at least one intensity modulator (IM, IMIij) adapted to modulate an intensity of each reference pixel beam by applying a modulable pixel transmittance (xij),
the method comprising the steps of:

**A** generating a detected pixel signal (Spix) from the recombined pixel beam, with the detected pixel signal having an intensity called total pixel intensity (Itot/pix);
**B** applying a pixel transmittance value (xij) to each reference pixel beam;
**C** applying a first transmittance value (T1) to the reference beam;
with said values being determined via a control loop and according to an optimisation criterion, with the optimisation criterion comprising obtaining, for each pixel, a total pixel intensity below a threshold intensity (Is), and obtaining an improved signal-to-noise ratio (SNR);
**D** determining, for each pixel, a frequency (F(i,j)) of a beat of the recombined beam.

15. The method according to the preceding claim, further comprising a step C' involving applying a ratio value between the reference pixel beam and the image pixel beam, with said ratio value being determined by said control loop.

[Fig 1]

FIG.1

[Fig 2]

FIG.2

[Fig 3]

FIG.3

[Fig 4]

FIG.4

[Fig 5]

FIG.5

[Fig 6]

FIG.6

[Fig 7]

FIG.7

[Fig 8]

FIG.8

[Fig 9]

FIG.9

EP 3 936 887 B1

[Fig 10]

FIG.10

34

[Fig 11]

$x_{ij} = 1$  Tf ini

Prise d'image

$k = 1, t = 1$

90 — $\forall (i,j) : I_{tot/pix(i,j)} (k=1, t=1) < I_s$ ?

non → 100 — Réduire $x_{ij} : x_{ij}(t = 1)$

oui

200 — Calcul du SNR (1,1)

300 — $T_{1(k)} \rightarrow T_{1(k+1)}$

350 — $I_{tot/pix(i,j)}(k, t=1) < I_s$ ?

oui → $k = k+1$

non

400 — $SNR_{k+1} > SNR_k$

oui → $k = k+1$

non

500 — $x_{ij}(t) \rightarrow x_{ij}(t+1)$  pour améliorer $I_{tot/pix(i,j)}(k,t)$ ou $I_{AC/pix(i,j)}(k,t)$

600 — $I_{tot/pix(i,j)}(k,t) < I_s$ ?

oui → $k = k+1$

non

$k_{final} = k - 1, t_{final} = t-1$

$x_{ij}(k_{final})$ , $T_1(k_{final})$

FIG.11

[Fig 12]

FIG.12

[Fig 13]

P1

| x | T1 | T2 | Itot | SNR |
|---|----|----|------|-----|
| 1 | 0.5 | 0.5 | $1.0\,10^4$ | 8.94 (N/A) |
| 0.11 | 0.5 | 0.5 | $9.0\,10^3$ | 3.13 |
| 0.11 | 0.82 | 0.82 | $2.3\,10^3$ | 3.64 |
| 0.84 | 0.82 | 0.82 | $9.0\,10^3$ | 5.09 |

FIG.13

[Fig 14]

| P2 | | | | |
|---|---|---|---|---|
| x | T1 | T2 | Itot | SNR |
| 1 | 0.5 | 0.5 | $1.0\ 10^4$ | 1.41 (N/A) |
| 0.24 | 0.5 | 0.5 | $8.9\ 10^3$ | 0.73 |
| 0.24 | 0.82 | 0.82 | $1.7\ 10^3$ | 0.99 |
| 1 | 0.82 | 0.82 | $5.1\ 10^3$ | 1.16 |

FIG.14

[Fig 15]

FIG.15

[Fig 16]

FIG.16

[Fig 17]

FIG.17

[Fig 18]

FIG.18

[Fig 19]

FIG.19

[Fig 20]

IMI(i,j)

ZC

FIG.20

[Fig 21]

IMI(i,j)

BOX
Sub

AR

FIG.21

[Fig 22]

FIG.22

[Fig 23]

FIG.23

[Fig 24]

FIG.24

[Fig 25]

FIG.25

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019025431 A1
- FR 2000408

- FR 2005186

**Littérature non-brevet citée dans la description**

- **AFLATOUNI.** Nano photonic cohérent imager. *Optics Express,* 2015, vol. 23 (4), 5117